# EUROPEAN PATENT SPECIFICATION

(11) **EP 3 461 097 B1**
(45) Date of publication and mention of the grant of the patent: **24.08.2022**
(21) Application number: 17812693.4
(22) Date of filing: 13.06.2017
(51) Int. Cl.: H04L 9/40, H04L 65/40

(54) **ENCRYPTED CONTENT DETECTION METHOD AND APPARATUS**
VERFAHREN UND VORRICHTUNG ZUR ERKENNUNG VON VERSCHLÜSSELTEM INHALT
APPAREIL ET PROCÉDÉ DE DÉTECTION DE CONTENU CRYPTÉ

(30) Priority: 15.06.2016 CN 201610428384
(43) Date of publication of application: 27.03.2019
(73) Proprietor: Huawei Technologies Co., Ltd., Longgang District Shenzhen, Guangdong 518129 (CN)
(72) Inventor: XIE, Yuming, Shenzhen Guangdong 518129 (CN); ZHANG, Bo, Shenzhen Guangdong 518129 (CN); HUANG, Zhigang, Shenzhen Guangdong 518129 (CN); YOU, Jianjie, Shenzhen Guangdong 518129 (CN); WANG, Yang, Shenzhen Guangdong 518129 (CN)
(74) Representative: Isarpatent
(86) International application number: PCT/CN2017/087989
(87) International publication number: WO 2017/215582

(56) References cited:
- CN-A- 101 695 038
- CN-A- 104 468 560
- CN-A- 105 429 962
- US-A1- 2009 025 078
- US-A1- 2011 231 659

## Description

### TECHNICAL FIELD

The present invention relates to the communications field, and more specifically, to a method for detecting encrypted content, a key manager, a middlebox network device, and a server.

### BACKGROUND

With wide application of cloud technologies, more enterprises deploy cloud services in a data center network (Data Center Network, DCN). To protect privacy security of user information, the DCN provides encrypted access to a cloud service based on the Transport Layer Security (Transport Layer Security). In addition, to protect service security, a security resource pool is deployed at an egress of the DCN, and the security resource pool includes a firewall (Firewall, FW), an intrusion prevention system (Intrusion Prevention System, IPS), distributed denial of service (Distributed Denial of Service, DDoS) prevention, virus detection, network behavior monitoring, and the like.

The TLS exposes a new covert threat carrier to a hacker while providing confidentiality and data integrity between two communications application programs. If a virus, a Trojan horse, malware, or the like is hidden in encrypted content, and the encrypted content is not detected by using a network security device (usually referred to as a middlebox network device (middlebox)) such as an FW, an intrusion detection system (Intrusion Detection System, IDS), or an IPS, losses are caused to enterprises and individuals. Therefore, how the network security device such as the FW or the IPS detects TLS encrypted content used for accessing a DCN service becomes a critical issue.

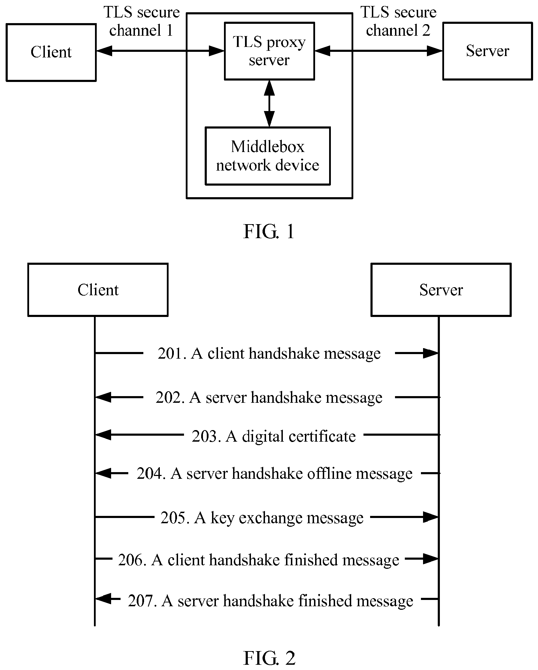

In the prior art, a method shown in FIG. 1 is used to detect TLS encrypted content. As shown in FIG. 1, a TLS secure channel 1 is established between a client and a TLS proxy server, and a TLS secure channel 2 is established between the TLS proxy server and a server. That the client sends an encrypted packet to the server is used as an example. The TLS proxy server decrypts an encrypted packet received by using the TLS secure channel 1, and then transmits a decrypted packet to a middlebox network device (middlebox) for plaintext content detection. The middlebox network device returns an optimized packet to the TLS proxy server, and then the TLS proxy server encrypts the optimized packet, and sends an encrypted packet to the server by using the TLS connection 2. Such a solution using two independent TLS secure channels needs to rely on the TLS proxy server, and therefore high detection complexity and relatively high costs are caused.

In the published patent prior art, US2009/0025078 A1 discloses that a key server can provide TLS session information including session keys to all or selected ones of several security enforcement points. It also discloses that one or more encrypted payloads are transmitted over respective TLS secured communications paths to a server computing device where the encrypted payloads can be decrypted into cleartext payloads at each of a plurality of security enforcement points. However, the encrypted payloads can be decrypted for use in performing associated security functions through the session keys for each of the TLS secured communications paths. US2011/231659 A1 discloses that an intermediary device receives a master key directly from a source, once the source device has verified that the trusted intermediary device is a trusted device.

### SUMMARY

The object of the present invention is to provide a method for detecting encrypted content, a key manager, a middlebox network device, a server, a client, and a software-defined networking (Software-Defined Network, SDN) controller, to reduce detection complexity and detection costs. This object is solved by the attached independent claims and further advantageous embodiments and improvements of the present invention are listed in the dependent claims. Hereinafter, aspects of the invention are described which contribute to the understanding of the invention. However, it should be noted that the invention is defined by the attached claims.

According to a first aspect, a method for detecting encrypted content is provided, where the method is applied to a communications network, the communications network includes a middlebox network device, a key manager, and a server, the middlebox network device is located on a Transport Layer Security TLS secure channel established between a client and the server, and the method includes: obtaining, by the key manager, key information of the TLS secure channel; and sending, by the key manager, the key information to the middlebox network device by using a first secure channel, so that the middlebox network device decrypts, by using a session key corresponding to the key information, encrypted application data transmitted over the TLS secure channel, and detects decrypted application data, where the encrypted application data is generated by the client or the server by encrypting application data based on the session key, and the first secure channel is a secure channel established between the key manager and the middlebox network device.

In the method for detecting encrypted content in this embodiment of the present invention, the middlebox network device decrypts the encrypted application data, and detects the decrypted application data. In this way, detection of encrypted content does not rely on a TLS proxy server, and detection complexity and detection costs can be reduced.

With reference to the first aspect, in a first possible implementation of the first aspect, before the obtaining, by the key manager, key information of the TLS secure channel, the method further includes: receiving, by the key manager, a first key request message sent by the middlebox network device by using the first secure channel, where the first key request message includes 5-tuple information of the TLS secure channel, the first key request message is used to request the key information, and the 5-tuple information includes an Internet Protocol IP address of the client, a port number of the client, an IP address of the server, a port number of the server, and a transport layer protocol; and the obtaining, by the key manager, key information of the TLS secure channel includes: obtaining, by the key manager, the key information based on the 5-tuple information.

With reference to the first possible implementation of the first aspect, in a second possible implementation of the first aspect, the obtaining, by the key manager, the key information based on the 5-tuple information includes: sending, by the key manager, a second key request message to the server by using a second secure channel, where the second key request message includes the 5-tuple information, and the second secure channel is a secure channel established between the key manager and the server; and receiving, by the key manager, the key information sent by the server based on the second key request message.

With reference to the first aspect, in a third possible implementation of the first aspect, the obtaining, by the key manager, key information of the TLS secure channel includes: receiving, by the key manager by using a second secure channel, session information sent by the server, where the session information includes 5-tuple information of the TLS secure channel and the key information, the 5-tuple information includes an Internet Protocol (Internet Protocol, IP) address of the client, a port number of the client, an IP address of the server, a port number of the server, and a transport layer protocol, and the second secure channel is a secure channel established between the key manager and the server; and obtaining, by the key manager, the key information in the session information; before the sending, by the key manager, the key information to the middlebox network device by using a first secure channel, the method further includes: determining, by the key manager, the middlebox network device that is on the TLS secure channel identified by the 5-tuple information; and the method further includes: sending, by the key manager, the 5-tuple information to the middlebox network device.

With reference to the third possible implementation of the first aspect, in a fourth possible implementation of the first aspect, the communications network further includes a software-defined networking SDN controller, where the key manager is connected to the SDN controller, and the SDN controller is connected to the middlebox network device; and the determining, by the key manager, the middlebox network device based on the 5-tuple information includes: sending, by the key manager, a device request message to the SDN controller, where the device request message includes the 5-tuple information, and the device request message is used to request device information of the middlebox network device that is on the TLS secure channel identified by the 5-tuple information; and receiving, by the key manager, the device information sent by the SDN controller based on the device request message.

With reference to any one of the first aspect and the possible implementations of the first aspect, in a fifth possible implementation of the first aspect, the key information includes a first random number, a second random number, a pre-master key, and a pseudo-random function, the first random number and the pre-master key are random numbers generated by the client, the second random number is a random number generated by the server, and the pseudo-random function is used to generate the session key based on the first random number, the second random number, and the pre-master key.

With reference to any one of the first aspect and the second to the fourth possible implementations of the first aspect, in a sixth possible implementation of the first aspect, the key information includes the session key.

With reference to the first aspect, in a seventh possible implementation of the first aspect, the key information includes the session key, and the obtaining, by the key manager, key information of the TLS secure channel includes: generating, by the key manager, the session key based on a first random number, a second random number, a pre-master key, and a pseudo-random function that are received from the server, where the first random number and the pre-master key are random numbers generated by the client, the second random number is a random number generated by the server, and the pseudo-random function is used to generate the session key based on the first random number, the second random number, and the pre-master key.

With reference to any one of the first aspect and the possible implementations of the first aspect, in an eighth possible implementation of the first aspect, before the sending, by the key manager, the key information to the middlebox network device by using a first secure channel, the method further includes: establishing the first secure channel between the key manager and the middlebox network device.

According to a second aspect, a method for detecting encrypted content is provided, where the method is applied to a communications network, the communications network includes a middlebox network device, a key manager, and a server, the middlebox network device is located on a Transport Layer Security TLS secure channel established between a client and the server, and the method includes: receiving, by the middlebox network device by using a first secure channel, key information that is of the TLS secure channel and that is sent by the key manager, where the first secure channel is a secure channel established between the middlebox network device and the key manager; obtaining, by the middlebox network device based on 5-tuple information of the TLS secure channel, encrypted application data transmitted over the TLS secure channel, where the 5-tuple information includes an Internet Protocol IP address of the client, a port number of the client, an IP address of the server, a port number of the server, and a transport layer protocol, and the encrypted application data is generated by the client or the server by encrypting application data based on a session key corresponding to the key information; and decrypting, by the middlebox network device, the encrypted application data by using the session key, and detecting decrypted application data.

In the method for detecting encrypted content in this aspect of the present invention, the middlebox network device decrypts the encrypted application data, and detects the decrypted application data. In this way, detection of encrypted content does not rely on a TLS proxy server, and detection complexity and detection costs can be reduced.

With reference to the second aspect, in a first possible implementation of the second aspect, the key information includes a first random number, a second random number, a pre-master key, and a pseudo-random function, the first random number and the pre-master key are random numbers generated by the client, the second random number is a random number generated by the server, and the pseudo-random function is used to generate the session key based on the first random number, the second random number, and the pre-master key; and before the decrypting, by the middlebox network device, the encrypted application data by using the session key, the method further includes: generating, by the middlebox network device, the session key based on the first random number, the second random number, the pre-master key, and the pseudo-random function, for example, using the first random number, the second random number, and the pre-master key as independent variables of the pseudo-random function, and computing the session key by using the pseudo-random function.

With reference to the second aspect or the first possible implementation of the second aspect, in a second possible implementation of the second aspect, the key information includes the session key.

With reference to any one of the second aspect and the possible implementations of the second aspect, in a third possible implementation of the second aspect, before the receiving, by the middlebox network device by using a first secure channel, key information that is of the TLS secure channel and that is sent by the key manager, the method further includes: sending, by the middlebox network device, a key request message to the key manager by using the first secure channel, where the key request message includes the 5-tuple information, and the key request message is used to request the key information; and the receiving, by the middlebox network device by using a first secure channel, key information that is of the TLS secure channel and that is sent by the key manager includes: receiving, by the middlebox network device by using the first secure channel, the key information sent by the key manager based on the key request message.

With reference to any one of the second aspect and the possible implementations of the second aspect, in a fourth possible implementation of the second aspect, before the obtaining, by the middlebox network device based on 5-tuple information of the TLS secure channel, encrypted application data transmitted over the TLS secure channel, the method further includes: receiving, by the middlebox network device by using the first secure channel, the 5-tuple information sent by the key manager.

According to a third aspect, a method for detecting encrypted content is provided, where the method is applied to a communications network, the communications network includes a middlebox network device, a key manager, and a server, the middlebox network device is located on a Transport Layer Security TLS secure channel established between a client and the server, and the method includes: determining, by the server, key information of the TLS secure channel; and sending, by the server, the key information to the key manager by using a second secure channel, so that the key manager sends the key information to the middlebox network device by using the first secure channel, and the middlebox network device decrypts, by using a session key corresponding to the key information, encrypted application data transmitted over the TLS secure channel, and detects decrypted application data, where the encrypted application data is generated by the client or the server by encrypting application data based on the session key, the first secure channel is a secure channel established between the key manager and the middlebox network device, and the second secure channel is a secure channel established between the key manager and the server.

In the method for detecting encrypted content in this aspect of the present invention, the middlebox network device decrypts the encrypted application data, and detects the decrypted application data. In this way, detection of encrypted content does not rely on a TLS proxy server, and detection complexity and detection costs can be reduced.

With reference to the third aspect, in a first possible implementation of the third aspect, before the sending, by the server, the key information to the key manager by using a second secure channel, the method further includes: sending, by the server, a detection query message to the client by using the TLS secure channel, where the detection query message is used to determine whether the client allows the middlebox network device to detect encrypted content of the encrypted application data; and receiving, by the server, a detection allowed message that is fed back on the detection query message and that is sent by the client, where the detection allowed message is used to indicate that the client allows the middlebox network device to detect the encrypted content of the encrypted application data.

When it is determined that the client allows the middlebox network device to detect encrypted content transmitted between the client and the server, the encrypted content is detected, so that a security risk can be reduced.

With reference to the third aspect or the first possible implementation of the third aspect, in a second possible implementation of the third aspect, before the determining, by the server, key information of the TLS secure channel, the method further includes: receiving, by the server, a key request message sent by the key manager by using the second secure channel, where the key request message includes 5-tuple information of the TLS secure channel, the key request message is used to request the key information, and the 5-tuple information includes an Internet Protocol IP address of the client, a port number of the client, an IP address of the server, a port number of the server, and a transport layer protocol; and the determining, by the server, key information includes: determining, by the server based on the 5-tuple information, the key information of the TLS secure channel identified by the 5-tuple information.

With reference to the third aspect or the first possible implementation of the third aspect, in a third possible implementation of the third aspect, the method further includes: determining, by the server, 5-tuple information of the TLS secure channel, where the 5-tuple information includes an Internet Protocol IP address of the client, a port number of the client, an IP address of the server, a port number of the server, and a transport layer protocol; and sending, by the server, the 5-tuple information to the key manager.

According to a fourth aspect, a method for detecting encrypted content is provided, where the method is applied to a communications network, the communications network includes a middlebox network device, a key manager, and a server, the middlebox network device is located on a Transport Layer Security TLS secure channel established between a client and the server, and the method includes: receiving, by the client, a detection query message sent by the server by using the TLS secure channel, where the detection query message is used to determine whether the client allows the middlebox network device to detect encrypted content of encrypted application data, and the encrypted application data is generated by the client or the server by encrypting application data based on a session key of the TLS secure channel; and when the client allows the middlebox network device to detect the encrypted content of the encrypted application data, sending a detection allowed message to the server by using the TLS secure channel.

When it is determined that the client allows the middlebox network device to detect encrypted content transmitted between the client and the server, the encrypted content is detected, so that a security risk can be reduced.

According to a fifth aspect, a method for detecting encrypted content is provided, where the method is applied to a communications network, the communications network includes a middlebox network device, a key manager, an SDN controller, and a server, the middlebox network device is located on a Transport Layer Security TLS secure channel established between a client and the server, the key manager is connected to the SDN controller, the SDN controller is connected to the middlebox network device, and the method includes: receiving, by the SDN controller, a device request message sent by the key manager, where the device request message includes 5-tuple information of the TLS secure channel, and the 5-tuple information includes an Internet Protocol IP address of the client, a port number of the client, an IP address of the server, a port number of the server, and a transport layer protocol; determining, by the SDN controller based on the device request message, device information of the middlebox network device that is on the TLS secure channel identified by the 5-tuple information; and sending, by the SDN controller, the device information to the key manager, so that the key manager sends the 5-tuple information and key information that is of the TLS secure channel to the middlebox network device based on the device information of the middlebox network device by using a first secure channel, and the middlebox network device obtains, based on the 5-tuple information, encrypted application data transmitted between the client and the server by using the TLS secure channel, decrypts the encrypted application data by using a session key corresponding to the key information, and detects decrypted application data, where the encrypted application data is generated by the client or the server by encrypting application data based on the session key, and the first secure channel is a secure channel established between the middlebox network device and the key manager.

In the method for detecting encrypted content in this aspect of the present invention, the middlebox network device determined by the SDN controller decrypts the encrypted application data, and detects the decrypted application data. In this way, detection of encrypted content does not rely on a TLS proxy server, and detection complexity and detection costs can be reduced.

According to a sixth aspect, a key manager is provided, and is configured to perform the method according to any one of the first aspect and the possible implementations of the first aspect. Specifically, the key manager includes units configured to perform the method according to any one of the first aspect and the possible implementations of the first aspect.

According to a seventh aspect, a middlebox network device is provided, and is configured to perform the method according to any one of the second aspect and the possible implementations of the second aspect. Specifically, the middlebox network device includes units configured to perform the method according to any one of the second aspect and the possible implementations of the second aspect.

According to an eighth aspect, a server is provided, and is configured to perform the method according to any one of the third aspect and the possible implementations of the third aspect. Specifically, the server includes units configured to perform the method according to any one of the third aspect and the possible implementations of the third aspect.

According to a ninth aspect, a client is provided, and is configured to perform the method according to any one of the fourth aspect and the possible implementations of the fourth aspect. Specifically, the client includes units configured to perform the method according to any one of the fourth aspect and the possible implementations of the fourth aspect.

According to a tenth aspect, an SDN controller is provided, and is configured to perform the method according to any one of the fifth aspect and the possible implementations of the fifth aspect. Specifically, the SDN controller includes units configured to perform the method according to any one of the fifth aspect and the possible implementations of the fifth aspect.

According to an eleventh aspect, a key manager is provided, and the key manager includes a receiver, a transmitter, a processor, a memory, and a bus system. The receiver, the transmitter, the processor, and the memory are connected by using the bus system. The memory is configured to store an instruction. The processor is configured to execute the instruction stored in the memory, to control the receiver to receive a signal and control the transmitter to send a signal. When the processor executes the instruction stored in the memory, the processor performs the method according to any one of the first aspect and the possible implementations of the first aspect.

According to a twelfth aspect, a middlebox network device is provided, and the middlebox network device includes a receiver, a transmitter, a processor, a memory, and a bus system. The receiver, the transmitter, the processor, and the memory are connected by using the bus system. The memory is configured to store an instruction. The processor is configured to execute the instruction stored in the memory, to control the receiver to receive a signal and control the transmitter to send a signal. When the processor executes the instruction stored in the memory, the processor performs the method according to any one of the second aspect and the possible implementations of the second aspect.

According to a thirteenth aspect, a server is provided, and the server includes a receiver, a transmitter, a processor, a memory, and a bus system. The receiver, the transmitter, the processor, and the memory are connected by using the bus system. The memory is configured to store an instruction. The processor is configured to execute the instruction stored in the memory, to control the receiver to receive a signal and control the transmitter to send a signal. When the processor executes the instruction stored in the memory, the processor performs the method according to any one of the third aspect and the possible implementations of the third aspect.

According to a fourteenth aspect, a client is provided, and the client includes a receiver, a transmitter, a processor, a memory, and a bus system. The receiver, the transmitter, the processor, and the memory are connected by using the bus system. The memory is configured to store an instruction. The processor is configured to execute the instruction stored in the memory, to control the receiver to receive a signal and control the transmitter to send a signal. When the processor executes the instruction stored in the memory, the processor performs the method according to any one of the fourth aspect and the possible implementations of the fourth aspect.

According to a fifteenth aspect, an SDN controller is provided, and the SDN controller includes a receiver, a transmitter, a processor, a memory, and a bus system. The receiver, the transmitter, the processor, and the memory are connected by using the bus system. The memory is configured to store an instruction. The processor is configured to execute the instruction stored in the memory, to control the receiver to receive a signal and control the transmitter to send a signal. When the processor executes the instruction stored in the memory, the processor performs the method according to any one of the fifth aspect and the possible implementations of the fifth aspect.

According to a sixteenth aspect, this application provides a computer readable medium, configured to store a computer program, and the computer program includes an instruction used to perform the method according to any one of the first aspect and the possible implementations of the first aspect.

According to a seventeenth aspect, this application provides a computer readable medium, configured to store a computer program, and the computer program includes an instruction used to perform the method according to any one of the second aspect and the possible implementations of the second aspect.

According to an eighteenth aspect, this application provides a computer readable medium, configured to store a computer program, and the computer program includes an instruction used to perform the method according to any one of the third aspect and the possible implementations of the third aspect.

According to a nineteenth aspect, this application provides a computer readable medium, configured to store a computer program, and the computer program includes an instruction used to perform the method according to any one of the fourth aspect and the possible implementations of the fourth aspect.

According to a twentieth aspect, this application provides a computer readable medium, configured to store a computer program, and the computer program includes an instruction used to perform the method according to any one of the fifth aspect and the possible implementations of the fifth aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 shows a method for detecting encrypted content in the prior art;
FIG. 2 is a schematic flowchart of a procedure of a TLS handshake phase;
FIG. 3 is a schematic block diagram of a system architecture according to an embodiment of the present invention;
FIG. 4 is a schematic flowchart of a method for detecting encrypted content according to an embodiment of the present invention;
FIG. 5 is a schematic flowchart of a method for detecting encrypted content according to an embodiment of the present invention;
FIG. 6 is a schematic flowchart of a method for detecting encrypted content according to another embodiment of the present invention;
FIG. 7 is a schematic block diagram of a key manager according to an embodiment of the present invention;
FIG. 8 is a schematic block diagram of a middlebox network device according to an embodiment of the present invention;
FIG. 9 is a schematic block diagram of a server according to an embodiment of the present invention;
FIG. 10 is a schematic structural diagram of a key manager according to an embodiment of the present invention;
FIG. 11 is a schematic structural diagram of a middlebox network device according to an embodiment of the present invention; and
FIG. 12 is a schematic structural diagram of a server according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The Transport Layer Security TLS is used to provide confidentiality and data integrity between two communications application programs. A basic procedure of the TLS protocol is: (1) a client requests a public key from a server, and verifies the public key; (2) the client negotiates with the server, to generate a "session key" (the "session key" is also referred to as a "master key"); and (3) the client and the server perform encrypted communication by using the "session key". The first two steps of the foregoing procedure are referred to as a "handshake phase". FIG. 2 shows a procedure of a handshake phase between two communications application programs: the client and the server.

201. The client sends a client handshake (client_hello) message to the server, to start a TLS session.

First, the client (usually a browser) sends a request for encrypted communication to the server. The request is referred to as client hello. In this step, the client mainly provides the following information for the server:
(1) a supported protocol version, for example, TLS version 1.0;
(2) a random number generated by the client and used later for generating a "session key", where for ease of description, the random number generated by the client is referred to as a "first random number" in the following descriptions;
(3) a supported encryption method, for example, RSA public key encryption; and
(4) a supported compression method.

202. The server sends a server handshake (server_hello) message to the client.

After receiving the client handshake message, the server sends the server handshake message to the client. The server handshake message is referred to as server hello. The server handshake message mainly includes the following content:
(1) an encrypted communication protocol version determined to be used, for example, TLS version 1.0, where if a version supported by the browser is inconsistent with that supported by the server, the server terminates encrypted communication;
(2) a random number generated by the server and used later for generating a "session key", where for ease of description, the random number generated by the server is referred to as a "second random number" in the following descriptions;
(3) an encryption method determined to be used, for example, RSA public key encryption; and
(4) a determined compression method.

203. The server sends a digital certificate (certificate) to the client.

The digital certificate of the server includes a public key of the server. After receiving the digital certificate sent by the server, the client authenticates the digital certificate. If authentication succeeds, the client obtains the public key of the server.

204. The server sends a server handshake offline (server hello done) message to the client.

The server handshake offline message indicates that the server_hello message has been sent.

205. The client sends a key exchange (client _key_exchange) message to the server.

The key exchange message is encrypted by using the public key of the server. The key exchange message includes a random number generated by the client. The random number is a third random number in the handshake phase, and is referred to as a "pre-master key". With the pre-master key, the client and the server each have three random numbers. Then the client and the server use the three random numbers as three independent variables of a pseudo-random function, and can separately generate a same "session key" used for a current session.

206. The client sends a client finished (finished) message to the server.

The client finished message includes hash values of all content sent in steps 201 to 205, for verification by the server.

207. The server sends a server finished (finished) message to the client.

After receiving the third random number of the client, to be specific, the pre-master key, the server generates, through computation, the "session key" used for the current session. Then, the server sends the server finished message to the client. The server finished message includes hash hash values of all content sent in steps 201 to 206, for verification by the client. At this point, the entire handshake phase ends.

After the handshake phase is completed, a TLS secure channel is successfully established, and the client and the server can transmit application data (application data) to each other over the TLS secure channel, to be specific, the client and the server perform encrypted communication. When one of the client and the server encrypts to-be-transmitted content by using the "session key", the other may decrypt received encrypted content by using the session key. During encrypted communication between the client and the server, because a virus, a Trojan horse, malware, and the like may be hidden in the encrypted content, TLS encrypted content needs to be detected. The solution shown in FIG. 1 and used in the prior art needs to rely on a TLS proxy server, and therefore problems of high detection complexity and relatively high costs are caused.

To resolve the problems, an embodiment of the present invention provides a method for detecting encrypted content, and the method does not need to rely on a TLS proxy server. Therefore, detection complexity and detection costs can be reduced.

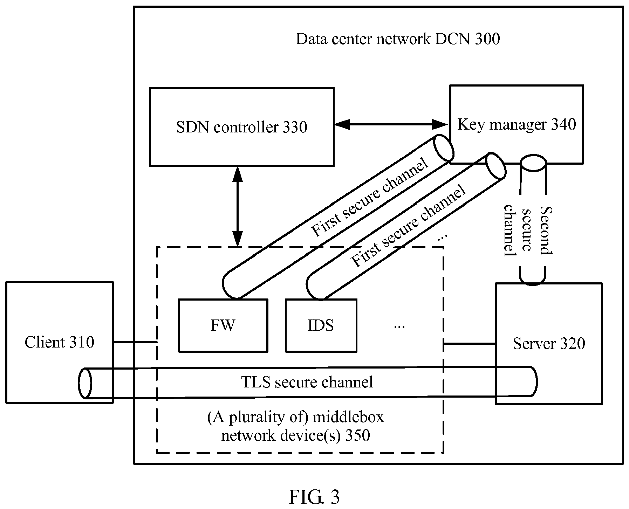

The method for detecting encrypted content in this embodiment of the present invention can be applied to a communications network, for example, a data center network DCN or a wide area network (Wide Area Network, WAN). In this embodiment of the present invention, the communications network is, for example, a data center network DCN. The method for detecting encrypted content according to this embodiment of the present invention is described in detail with reference to a system structure shown in FIG. 3.

As shown in FIG. 3, the system architecture includes a data center network DCN 300 and a client 310. The DCN 300 includes a server 320, an SDN controller 330, a key manager 340, and a middlebox network device 350. There is a trust relationship between the server 320, the SDN controller 330, the key manager 340, and the middlebox network device 350. The SDN controller 330 and the key manager 340 are two logically separated components. The key manager 340 may be physically a part of the SDN controller 330, or may be a separate device. In this embodiment of the present invention, the method for detecting encrypted content according to this embodiment of the present invention is mainly described by using the key manager 340 and the SDN controller 330 as two independent devices. It should be noted that when the key manager 340 and the SDN controller 330 are two independent devices, the key manager 340 and the SDN controller 330 are connected to each other, for example, connected by using the Transmission Control Protocol (Transmission Control Protocol, TCP) or by using the User Datagram Protocol (User Datagram Protocol, UDP), and the SDN controller 330 and the middlebox network device 350 are connected to each other (for example, connected by using the TCP or the UDP).

Specifically, in this embodiment of the present invention, the client 310 and the server 320 are two endpoints of a TLS session for accessing a service, and communicate with each other by establishing a TLS secure channel. The key manager 340 is responsible for managing and controlling TLS session parameters (for example, 5-tuple information) and key parameters (for example, a first random number, a second random number, a pre-master key, and a pseudo-random function or a session key) in a centralized manner. In addition, the DCN 300 may include a plurality of middlebox network devices 350, such as an FW, an IDS, and an IPS. The middlebox network device 350 is on the TLS secure channel. The middlebox network device 350 may obtain content (including plaintext in a handshake phase, encrypted content that is encrypted by using a public key, and encrypted content obtained after the handshake phase is completed) of communication between the client 310 and the server 320, and is responsible for detecting the encrypted content. The SDN controller 330 provides device information for the key manager 340, to be specific, notifies the key manager 340 of middlebox network devices 350 on the TLS secure channel that need to detect the encrypted content. A first secure channel is established between the key manager 340 and each middlebox network device 350 that needs to detect the encrypted content, for transmission of the TLS session parameters, the key parameters, and the like between the key manager 340 and the middlebox network device 350. The first secure channel may be a TLS secure channel, a Datagram Transport Layer Security (Datagram Transport Layer Security, DTLS) secure channel, or the like. A second secure channel is established between the key manager 340 and the server 320, for transmission of the TLS session parameters, the key parameters, and the like between the key manager 340 and the server 320. The second secure channel may be a TLS secure channel, a DTLS secure channel, or the like.

It should be understood that, for processes of establishing the first secure channel and the second secure channel, refer to the method shown in FIG. 2. For brevity, details are not described herein again.

It should be further understood that, in this embodiment of the present invention, numbers such as "first" and "second" are merely intended to distinguish between different objects, for example, to distinguish between secure channels established between different devices, and do not impose any limitation on the protection scope of this embodiment of the present invention.

It should be noted that detection of the encrypted content described in this embodiment of the present invention means decrypting encrypted application data and detecting decrypted application data.

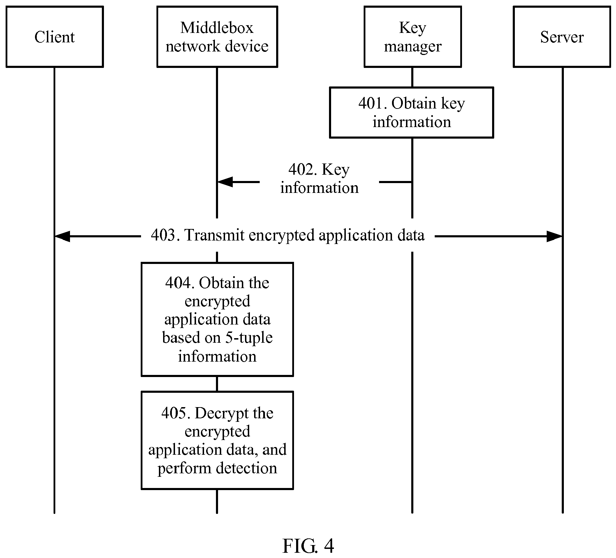

The method for detecting encrypted content according to this embodiment of the present invention is described in detail below with reference to FIG. 3 and FIG. 4. It should be understood that execution bodies in FIG. 4 may be separately corresponding to the devices shown in FIG. 3.

In this embodiment of the present invention, there may be a plurality of middlebox network devices that need to detect encrypted content of the encrypted application data transmitted over the TLS secure channel. For example, an IPS, an IDS, and a DDoS all need to detect the encrypted content. In FIG. 4, only one middlebox network device is used as an example for description. For another middlebox network device that needs to detect the encrypted content of the encrypted application data transmitted over the TLS secure channel, refer to descriptions of the middlebox network device shown in FIG. 4. Details are not described below.

401. A key manager obtains key information of a TLS secure channel.

It should be understood that the TLS secure channel may be the TLS secure channel shown in FIG. 3.

Optionally, the key information may include a first random number, a second random number, a pre-master key, and a pseudo-random function. For detailed descriptions of the first random number, the pre-master key, and the second random number, refer to an existing protocol or the foregoing descriptions of FIG. 2. For brevity, details are not described herein again.

Optionally, the key information may include a session key.

For the session key, refer to an existing protocol or the foregoing descriptions of FIG. 2. For brevity, details are not described herein again.

In this embodiment of the present invention, the key information may be sent by a server to the key manager, or may be pre-stored by the key manager.

For example, when one of the middlebox network devices needs to detect the encrypted content of the encrypted application data transmitted over the TLS secure channel, the key manager may obtain the key information of the TLS secure channel from the server, and send the obtained key information to the middlebox network device. In addition, the key manager may locally store the key information of the TLS secure channel. In this case, when another middlebox network device also needs to detect the encrypted content of the encrypted application data transmitted over the TLS secure channel, the key manager may directly send the previously stored key information of the TLS secure channel to the middlebox network device, with no need to request the server for the key information of the TLS secure channel.

Optionally, if the key information is sent by the server to the key manager, before the server sends the key information to the key manager, the method may further include: sending, by the server, a detection query message to a client by using the TLS secure channel, where the detection query message is used to determine whether the client allows the middlebox network device to detect encrypted content of the encrypted application data; and receiving, by the server, a detection allowed message that is fed back on the detection query message and that is sent by the client, where the detection allowed message is used to indicate that the client allows the middlebox network device to detect the encrypted content of the encrypted application data.

Specifically, the server first queries whether the client allows the middlebox network device to detect the encrypted content of the encrypted application data. The server can send the key information to the key manager only if the client allows the middlebox network device to detect the encrypted content of the encrypted application data. If the client does not allow the middlebox network device to detect the encrypted application data, the server does not send the key information to the key manager, or notifies the key manager that the server cannot provide the key information for the key manager.

402. The key manager sends the key information to a middlebox network device by using a first secure channel.

It should be understood that the first secure channel may be the first secure channel shown in FIG. 3.

403. A client and a server transmit encrypted application data to each other over the TLS secure channel.

When the client and the server transmit application data to each other over the TLS secure channel, a transmit end encrypts the application data by using the session key, to generate and transmit the encrypted application data.

404. The middlebox network device obtains the encrypted application data based on 5-tuple information of the TLS secure channel.

In an establishment process of the TLS secure channel, the middlebox network device may obtain the 5-tuple information of the TLS secure channel. The 5-tuple information uniquely determines the TLS secure channel. The 5-tuple information includes an Internet Protocol IP address of the client, a port number of the client, an IP address of the server, a port number of the server, and a transport layer protocol. The middlebox network device can obtain, by using the 5-tuple information, the encrypted application data transmitted over the TLS.

405. The middlebox network device decrypts the encrypted application data by using a session key corresponding to the key information, and detects decrypted application data.

In this embodiment of the present invention, in a first case, the key information sent by the key manager to the middlebox network device includes the first random number, the second random number, the pre-master key, and the pseudo-random function. In this case, before step 403, the middlebox network device may generate the session key based on the first random number, the second random number, the pre-master key, and the pseudo-random function that are sent by the key manager. Specifically, the middlebox network device may use, as three independent variables of the pseudo-random function, the first random number, the second random number, and the pre-master key that are sent by the key manager, to compute the session key. In this way, when the client and the server transmit the encrypted application data to each other over the TLS secure channel, after obtaining the encrypted application data based on the 5-tuple information, the middlebox network device may decrypt the encrypted application data by using the session key previously obtained through computation, and detect the decrypted application data. In this case, the session key corresponding to the key information is a session key generated based on the first random number, the second random number, the pre-master key, and the pseudo-random function that are included in the key information.

For the first case, the first random number, the second random number, the pre-master key, and the pseudo-random function that are sent by the key manager to the middlebox network device may be received from the server.

In this embodiment of the present invention, in a second case, the key information sent by the key manager to the middlebox network device includes a session key. In this case, the session key corresponding to the key information is the session key included in the key information, and after obtaining the encrypted application data based on the 5-tuple information, the middlebox network device may directly decrypt the encrypted application data by using the session key, and detect the decrypted application data.

For the second case, the session key sent by the key manager to the middlebox network device may be received from the server, or may be generated based on the first random number, the second random number, the pre-master key, and the pseudo-random function that are received from the server.

In the foregoing two cases, if it is detected that the decrypted application data poses no threat to a DCN, for example, the decrypted application data has no virus, Trojan horse, or the like, the decrypted application data is received and sent normally. If the decrypted application data poses a threat to the DCN, the DCN may control to stop transmission of the encrypted application data before the encrypted application data arrives at the server, or if the encrypted application data has arrived at the server, the DCN may control not to transmit application data to be transmitted subsequently.

Therefore, in the method for detecting encrypted content in this embodiment of the present invention, the middlebox network device decrypts the encrypted application data, and detects the decrypted application data. In this way, detection of encrypted content does not rely on a TLS proxy server, and detection complexity and detection costs can be reduced.

The method for detecting encrypted content according to this embodiment of the present invention is described in detail below with reference to specific embodiments.

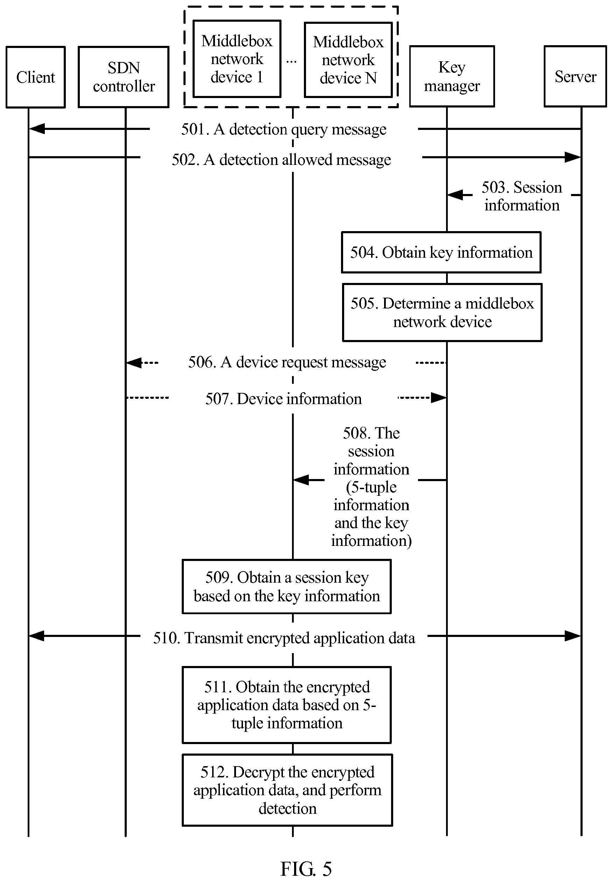

FIG. 5 is a schematic flowchart of a method for detecting encrypted content according to an embodiment of the present invention. It should be understood that a middlebox network device 1 to a middlebox network device N shown in FIG. 5 are N middlebox network devices that need to detect encrypted content of encrypted application data transmitted over a TLS secure channel. During specific implementation, there may be one or more middlebox network devices that need to detect encrypted content of encrypted application data transmitted over a TLS secure channel.

501. A server sends a detection query message to a client.

The server sends the detection query message to the client by using the TLS secure channel, to determine whether the client allows the middlebox network device to detect the encrypted content of the encrypted application data. The encrypted application data is generated by the client or the server by encrypting application data based on a session key.

It should be understood that the TLS secure channel may be the second secure channel shown in FIG. 3.

502. The client sends a detection allowed message to the server.

After receiving the detection query message, if the client allows the middlebox network device to detect the encrypted content of the encrypted application data, the client returns the detection allowed message.

503. The server sends session information to a key manager.

If the client allows the middlebox network device to detect the encrypted content of the encrypted application data, the server may actively provide the session information for the key manager by using the second secure channel. Alternatively, before sending the session information to the key manager, the server may directly send the session information to the key manager without querying the client.

The session information may include key information and 5-tuple information. Specifically, for specific content of the key information and the 5-tuple information, refer to descriptions of the key information in step 401 and descriptions of the 5-tuple information in step 404, respectively. For brevity, details are not described herein again.

504. The key manager obtains key information.

Specifically, after receiving the session information, the key manager may obtain the key information in the session information.

505. The key manager determines a middlebox network device based on 5-tuple information.

Specifically, the key manager determines the middlebox network device that is on the TLS secure channel identified by the 5-tuple information.

In this embodiment of the present invention, the key manager may be a module of an SDN controller, or may be a device independent of the SDN controller.

The SDN controller is configured to control a path used for data transmission between the client and the server. A forwarding device receives, on a forwarding path controlled by the SDN controller, a first packet in a handshake phase of the client and the server, and reports the packet to the SDN controller, so that the SDN controller can determine, based on information in the packet, that the packet belongs to the server, and can further determine an intermediate network device through which subsequent application data needs to pass and an intermediate network device that needs to detect encrypted content. In addition, the SDN controller stores a mapping relationship between 5-tuple information and a middlebox network device. The mapping relationship indicates a correspondence between 5-tuple information and an intermediate network device that detects encrypted content.

When the key manager is a module of the SDN controller, apparently, the key manager can directly determine the middlebox network device.

Optionally, when the key manager and the SDN controller are two independent devices, the key manager may specifically determine the middlebox network device by using the following steps.

506. The key manager sends a device request message to an SDN controller, where the device request message includes the 5-tuple information, and the device request message is used to request device information of the middlebox network device that is on the TLS secure channel identified by the 5-tuple information. The device information of the middlebox network device may specifically include an IP address of the middlebox network device.

507. The key manager receives the device information sent by the SDN controller based on the device request message.

Specifically, when the key manager and the SDN controller are two independent devices, the key manager sends the device request message to the SDN controller, to determine a middlebox network device that needs to detect the encrypted content of the encrypted application data. After receiving the device request message, the SDN controller may determine, based on the stored mapping relationship between 5-tuple information and a middlebox network device, the device information requested by the key manager. The SDN controller sends information to the key manager, and after receiving the information, the key manager may determine N middlebox network devices based on the device information.

508. The key manager sends the session information to the middlebox network device.

The key manager sends the session information to the N middlebox network devices by using N first secure channels, and notifies the N middlebox network devices of the 5-tuple information and the key information provided by the server.

509. The middlebox network device obtains a session key based on the key information.

For example, when the key information in the session information includes the first random number, the second random number, the pre-master key, and the pseudo-random function, the key manager uses the first random number, the second random number, and the pre-master key as three independent variables of the pseudo-random function, and obtains the session key through computation. Alternatively, the key manager directly extracts the session key from the session information.

510. The client and the server transmit encrypted application data to each other over a TLS secure channel.

511. The middlebox network device obtains the encrypted application data based on the 5-tuple information.

512. The middlebox network device decrypts the encrypted application data by using the session key, and detects decrypted application data.

In this embodiment of the present invention, for steps 510 to 512, refer to steps 403 to 405 in the method shown in FIG. 4. For brevity, details are not described herein again.

In the method for detecting encrypted content in this embodiment of the present invention, the middlebox network device decrypts the encrypted application data, and detects the decrypted application data. In this way, detection of encrypted content does not rely on a TLS proxy server, and detection complexity and detection costs can be reduced.

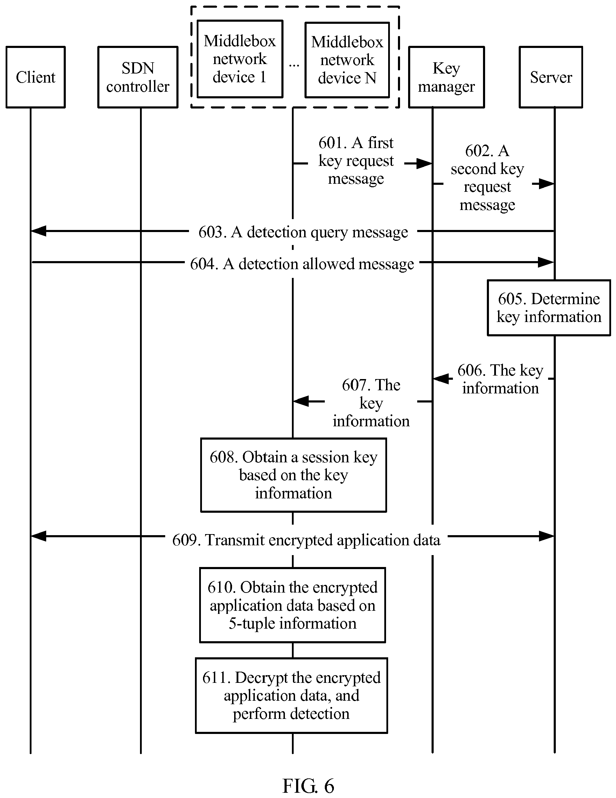

FIG. 6 is a schematic flowchart of a method for detecting encrypted content according to another embodiment of the present invention.

It should be understood that a middlebox network device 1 to a middlebox network device N shown in FIG. 6 are N middlebox network devices that need to detect encrypted content of encrypted application data transmitted over a TLS secure channel. During specific implementation, there may be one or more middlebox network devices that need to detect encrypted content of encrypted application data transmitted over a TLS secure channel.

601. A middlebox network device sends a first key request message to a key manager.

The key request message includes 5-tuple information of the TLS secure channel. For specific content of the 5-tuple information, refer to descriptions of the 5-tuple information in step 404 in the method shown in FIG. 4. For brevity, details are not described herein again.

In a plaintext phase of a handshake phase between a client and a server, the middlebox network device may detect that a TLS secure channel is being established between the client and the server, and the middlebox network device may obtain the 5-tuple information. After obtaining the 5-tuple information, the middlebox network device may add the 5-tuple information to the first key request message. The middlebox network device can request key information by sending the first key request message to the key manager, to obtain a session key. After receiving the first key request message, the key manager checks whether the key manager stores key information corresponding to the 5-tuple information. If the key manager has stored the key information, the key manager may perform step 607, to be specific, sends the key information to the middlebox network device. If the key manager does not store the key information, the key manager may perform step 602.

602. The key manager sends a second key request message to a server.

The second key request message includes the 5-tuple information. The key manager sends the second key request message to the server by using a second secure channel, to request the key information.

603. The server sends a detection query message to a client.

After receiving the second key request message sent by the key manager, the server may send the detection query message to the client, to query whether the client allows the middlebox network device to detect encrypted content of the encrypted application data. The encrypted application data is generated by the client or the server by encrypting application data based on the session key.

Alternatively, after receiving the key request message sent by the key manager, the server may directly perform step 605 without querying the client.

604. The client sends a detection allowed message to the server.

After receiving the detection query message, if the client allows the middlebox network device to detect the encrypted content of the encrypted application data, the client returns the detection allowed message.

605. The server determines key information.

Specifically, the server may determine, based on the 5-tuple information in the second key request message, the key information required by the key manager. The key information is obtained by the server in a handshake phase of establishing the TLS secure channel.

For the key information, refer to the foregoing descriptions of the key information in step 401 in the method shown in FIG. 4. For brevity, details are not described herein again.

606. The server sends the key information to the key manager by using a second secure channel.

It should be noted that the server may further send the 5-tuple information to the key manager. Specifically, the server may add the key information and the 5-tuple information to a same message (for example, a response message corresponding to the second key request message), and send the message to the key manager. Accordingly, after receiving the message, the key manager can learn that the key information carried in the message is the key information corresponding to the 5-tuple information.

Alternatively, the server may not send the 5-tuple information to the key manager. The server may specifically send the key information by using a response message corresponding to the second key request message. Accordingly, the key manager may determine, based on a correspondence between the second key request message and the response message, that the key information is the key information corresponding to the 5-tuple information included in the second key request message.

607. The key manager sends the key information to the middlebox network device.

The key manager sends the received key information to the middlebox network device by using a first secure channel.

It should be noted that the key manager may further send the 5-tuple information to the middlebox network device. Specifically, the key manager may add the key information and the 5-tuple information to a same message (for example, a response message corresponding to the first key request message), and send the message to the middlebox network device. Accordingly, after receiving the message, the middlebox network device can learn that the key information carried in the message is the key information corresponding to the 5-tuple information.

Alternatively, the key manager may not send the 5-tuple information to the middlebox network device. The key manager may specifically send the key information by using a response message corresponding to the first key request message. Accordingly, the middlebox network device may determine, based on a correspondence between the first key request message and the response message, that the key information is the key information corresponding to the 5-tuple information included in the first key request message.

608. The middlebox network device obtains a session key based on the key information.

For example, when the key information includes a first random number, a second random number, a pre-master key, and a pseudo-random function, the key manager uses the first random number, the second random number, and the pre-master key as three independent variables of the pseudo-random function, and obtains the session key through computation. Alternatively, the key manager directly extracts the session key from the session information.

609. The client and the server transmit encrypted application data to each other over a TLS secure channel.

610. The middlebox network device obtains the encrypted application data based on the 5-tuple information.

611. The middlebox network device decrypts the encrypted application data by using the session key, and detects decrypted application data.

In this embodiment of the present invention, for steps 609 to 611, refer to steps 403 to 405 in the method shown in FIG. 4. For brevity, details are not described herein again.

In the method for detecting encrypted content in this embodiment of the present invention, the middlebox network device decrypts the encrypted application data, and detects the decrypted application data. In this way, detection of encrypted content does not rely on a TLS proxy server, and detection complexity and detection costs can be reduced.

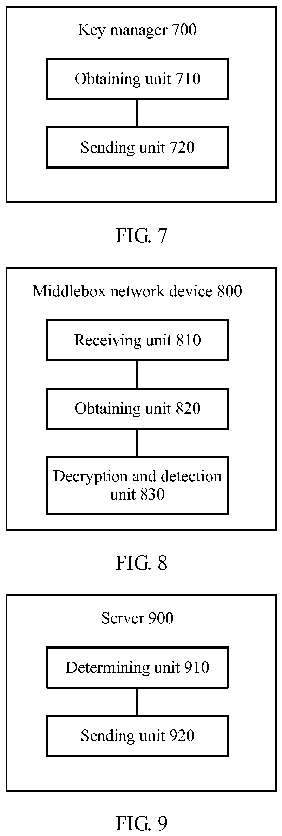

The methods for detecting encrypted content according to the embodiments of the present invention are described in detail above with reference to FIG. 1 to FIG. 6. A key manager, a middlebox network device, and a server according to the embodiments of the present invention are described below with reference to FIG. 7 to FIG. 9.

FIG. 7 is a schematic block diagram of a key manager 700 according to an embodiment of the present invention. As shown in FIG. 7, the key manager 700 includes an obtaining unit 710 and a sending unit 720.

The obtaining unit 710 is configured to obtain key information of a Transport Layer Security TLS secure channel, where the TLS secure channel is a secure channel established between a client and a server.

The sending unit 720 is configured to send, to a middlebox network device by using a first secure channel, the key information obtained by the obtaining unit 710, so that the middlebox network device decrypts, by using a session key corresponding to the key information, encrypted application data transmitted over the TLS secure channel, and detects decrypted application data. The encrypted application data is generated by the client or the server by encrypting application data based on the session key, the middlebox network device is located on the TLS secure channel, and the first secure channel is a secure channel established between the key manager and the middlebox network device.

The units of the key manager 700 in this embodiment of the present invention and the foregoing other operations or functions are respectively to implement corresponding procedures executed by the key manager in the methods shown in FIG. 4 to FIG. 6. For brevity, details are not described herein again.

Therefore, the key manager in this embodiment of the present invention provides the key information for the middlebox network device, so that the middlebox network device can decrypt the encrypted application data by using the session key corresponding to the key information, and detect the decrypted application data. In this way, detection of encrypted content does not rely on a TLS proxy server, and detection complexity and detection costs can be reduced.

FIG. 8 is a schematic block diagram of a middlebox network device 800 according to an embodiment of the present invention. As shown in FIG. 8, the middlebox network device 800 includes a receiving unit 810, an obtaining unit 820, and a decryption and detection unit 830.

The receiving unit 810 is configured to receive, by using a first secure channel, key information that is of the TLS secure channel and that is sent by a key manager, and the first secure channel is a secure channel established between the middlebox network device and the key manager.

The obtaining unit 820 is configured to obtain, based on 5-tuple information of the TLS secure channel, encrypted application data transmitted over the TLS secure channel. The 5-tuple information includes an Internet Protocol IP address of the client, a port number of the client, an IP address of the server, a port number of the server, and a transport layer protocol, and the encrypted application data is generated by the client or the server by encrypting application data based on a session key corresponding to the key information.

The decryption and detection unit 830 is configured to: decrypt the encrypted application data by using the session key, and detect decrypted application data.

The units of the middlebox network device 800 in this embodiment of the present invention and the foregoing other operations or functions are respectively to implement corresponding procedures executed by the middlebox network device in the methods shown in FIG. 4 to FIG. 6. For brevity, details are not described herein again.

Therefore, the middlebox network device in this embodiment of the present invention decrypts the encrypted application data, and detects the decrypted application data. In this way, detection of encrypted content does not rely on a TLS proxy server, and detection complexity and detection costs can be reduced.

FIG. 9 is a schematic block diagram of a server 900 according to an embodiment of the present invention. As shown in FIG. 9, the server 900 includes a determining unit 910 and a sending unit 920.

The determining unit 910 is configured to determine key information of a Transport Layer Security TLS secure channel established between a client and the server.

The sending unit 920 is configured to send, to a key manager by using a second secure channel, the key information determined by the determining unit 910, so that the key manager sends, by using a first secure channel, the key information to a middlebox network device located on the TLS secure channel, and the middlebox network device decrypts, by using a session key corresponding to the key information, encrypted application data transmitted over the TLS secure channel, and detects decrypted application data. The encrypted application data is generated by the client or the server by encrypting application data based on the session key, the first secure channel is a secure channel established between the key manager and the middlebox network device, and the second secure channel is a secure channel established between the key manager and the server.

The units of the server 900 in this embodiment of the present invention and the foregoing other operations or functions are respectively to implement corresponding procedures executed by the server in the methods shown in FIG. 4 to FIG. 6. For brevity, details are not described herein again.

Therefore, the server in this embodiment of the present invention provides the key information for the middlebox network device by providing the key information for the key manager, so that the middlebox network device can decrypt the encrypted application data by using the session key corresponding to the key information, and detect the decrypted application data. In this way, detection of encrypted content does not rely on a TLS proxy server, and detection complexity and detection costs can be reduced.

An embodiment of the present invention further provides a client, and the client includes a receiving unit and a sending unit.

The receiving unit is configured to receive a detection query message that is sent by using a Transport Layer Security TLS secure channel established between the client and a server. The detection query message is used to determine whether the client allows a middlebox network device to detect encrypted content of encrypted application data, and the encrypted application data is generated by the client or the server by encrypting application data based on a session key of the TLS secure channel.

The sending unit is configured to send, when the client allows the middlebox network device to detect the encrypted content of the encrypted application data, a detection allowed message to the server by using the TLS secure channel.

In this embodiment of the present invention, when it is determined that the client allows the middlebox network device to detect encrypted content transmitted between the client and the server, the encrypted content is detected, so that a security risk can be reduced.

An embodiment of the present invention further provides an SDN controller, and the SDN controller includes a receiving unit, a determining unit, and a sending unit.

The receiving unit is configured to receive a device request message sent by a key manager. The device request message includes 5-tuple information of a Transport Layer Security TLS secure channel established between a client and a server, and the 5-tuple information includes an Internet Protocol IP address of the client, a port number of the client, an IP address of the server, a port number of the server, and a transport layer protocol.

The determining unit is configured to determine, based on the device request message, device information of a middlebox network device that is on the TLS secure channel identified by the 5-tuple information.

The sending unit is configured to send the device information to the key manager, so that the key manager sends the 5-tuple information and key information of the TLS secure channel to the middlebox network device based on the device information of the middlebox network device by using a first secure channel, and the middlebox network device obtains, based on the 5-tuple information, encrypted application data transmitted between the client and the server by using the TLS secure channel, decrypts the encrypted application data by using a session key corresponding to the key information, and detects decrypted application data. The encrypted application data is generated by the client or the server by encrypting application data based on the session key, and the first secure channel is a secure channel established between the middlebox network device and the key manager.

Therefore, the middlebox network device determined by the SDN controller in this embodiment of the present invention decrypts the encrypted application data, and detects the decrypted application data. In this way, detection of encrypted content does not rely on a TLS proxy server, and detection complexity and detection costs can be reduced.

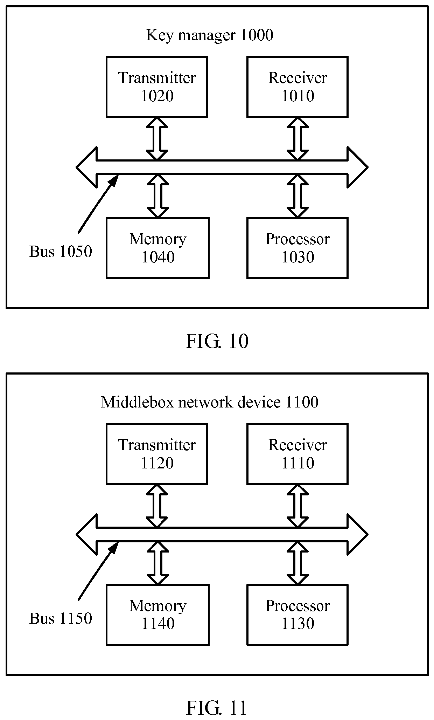

The methods for detecting encrypted content according to the embodiments of the present invention are described in detail above with reference to FIG. 1 to FIG. 6. A key manager, a middlebox network device, and a server according to the embodiments of the present invention are described below with reference to FIG. 10 to FIG. 12.

FIG. 10 is a schematic block diagram of a key manager 1000 according to an embodiment of the present invention. As shown in FIG. 10, the key manager 1000 includes a receiver 1010, a transmitter 1020, a processor 1030, a memory 1040, and a bus system 1050. The receiver 1010, the transmitter 1020, the processor 1030, and the memory 1040 are connected by using the bus system 1050. The memory 1040 is configured to store an instruction. The processor 1030 is configured to execute the instruction stored in the memory 1040, to control the receiver 1010 to receive a signal and control the transmitter 1020 to send a signal.

The processor 1030 is configured to obtain key information of a Transport Layer Security TLS secure channel, where the TLS secure channel is a secure channel established between a client and a server.

The transmitter 1020 is configured to send, to a middlebox network device by using a first secure channel, the key information obtained by the processor 1030, so that the middlebox network device decrypts, by using a session key corresponding to the key information, encrypted application data transmitted over the TLS secure channel, and detects decrypted application data. The encrypted application data is generated by the client or the server by encrypting application data based on the session key, the middlebox network device is located on the TLS secure channel, and the first secure channel is a secure channel established between the key manager and the middlebox network device.

It should be understood that in this embodiment of the present invention, the processor 1030 may be a central processing unit (central processing unit, "CPU" for short), or the processor 1030 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory 1040 may include a read-only memory and a random access memory, and provides an instruction and data for the processor 1030. A part of the memory 1040 may further include a nonvolatile random access memory. For example, the memory 1040 may further store information about a mapping relationship between 5-tuple information and key information.

In addition to a data bus, the bus system 1050 may include a power bus, a control bus, a status signal bus, and the like. However, for clarity of description, various buses are marked as the bus system 1050 in the figure.

In an implementation process, steps in the foregoing method may be completed by using an integrated logic circuit of hardware in the processor 1030 or an instruction in a form of software. Steps of the method for detecting encrypted content disclosed with reference to the embodiments of the present invention may be directly executed and completed by a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 1040. The processor 1030 reads information in the memory 1040, and completes the steps of the foregoing method in combination with hardware of the processor. To avoid repetition, details are not described herein.

The units of the key manager 1000 in this embodiment of the present invention and the foregoing other operations or functions are respectively to implement corresponding procedures executed by the key manager in the methods shown in FIG. 4 to FIG. 6. For brevity, details are not described herein again.

Therefore, the key manager in this embodiment of the present invention provides the key information for the middlebox network device, so that the middlebox network device can decrypt the encrypted application data by using the session key corresponding to the key information, and detect decrypted content. In this way, detection of encrypted content does not rely on a TLS proxy server, and detection complexity and detection costs can be reduced.

FIG. 11 is a schematic block diagram of a middlebox network device 1100 according to an embodiment of the present invention. As shown in FIG. 11, the middlebox network device 1100 includes a receiver 1110, a transmitter 1120, a processor 1130, a memory 1140, and a bus system 1150. The receiver 1110, the transmitter 1120, the processor 1130, and the memory 1140 are connected by using the bus system 1150. The memory 1140 is configured to store an instruction. The processor 1130 is configured to execute the instruction stored in the memory 1140, to control the receiver 1110 to receive a signal and control the transmitter 1120 to send a signal.

The receiver 1110 is configured to receive, by using a first secure channel, key information that is of the TLS secure channel and that is sent by a key manager, and the first secure channel is a secure channel established between the middlebox network device and the key manager.

The processor 1130 is configured to obtain, based on 5-tuple information of the TLS secure channel, encrypted application data transmitted over the TLS secure channel. The 5-tuple information includes an Internet Protocol IP address of the client, a port number of the client, an IP address of the server, a port number of the server, and a transport layer protocol, and the encrypted application data is generated by the client or the server by encrypting application data based on a session key corresponding to the key information.

The processor 1130 is further configured to: decrypt the encrypted application data by using the session key, and detect decrypted application data.

It should be understood that in this embodiment of the present invention, the processor 1130 may be a central processing unit (central processing unit, "CPU" for short), or the processor 1130 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory 1140 may include a read-only memory and a random access memory, and provides an instruction and data for the processor 1130. A part of the memory 1140 may further include a nonvolatile random access memory.

In addition to a data bus, the bus system 1150 may include a power bus, a control bus, a status signal bus, and the like. However, for clarity of description, various buses are marked as the bus system 1150 in the figure.

In an implementation process, steps in the foregoing method may be completed by using an integrated logic circuit of hardware in the processor 1130 or an instruction in a form of software. Steps of the method for detecting encrypted content disclosed with reference to the embodiments of the present invention may be directly executed and completed by a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 1140. The processor 1130 reads information in the memory 1140, and completes the steps of the foregoing method in combination with hardware of the processor. To avoid repetition, details are not described herein.

The units of the middlebox network device 1100 in this embodiment of the present invention and the foregoing other operations or functions are respectively to implement corresponding procedures executed by the middlebox network device in the methods shown in FIG. 4 to FIG. 6. For brevity, details are not described herein again.

Therefore, the middlebox network device in this embodiment of the present invention decrypts the encrypted application data, and detects decrypted content. In this way, detection of encrypted content does not rely on a TLS proxy server, and detection complexity and detection costs can be reduced.

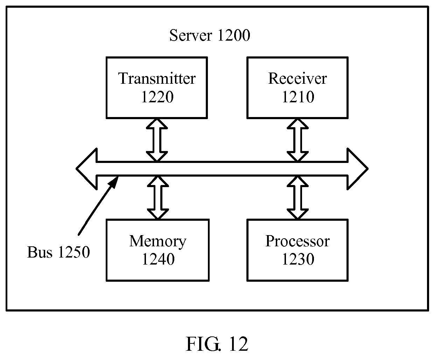

FIG. 12 is a schematic block diagram of a server 1200 according to an embodiment of the present invention. As shown in FIG. 12, the server 1200 includes a receiver 1210, a transmitter 1220, a processor 1230, a memory 1240, and a bus system 1250. The receiver 1210, the transmitter 1220, the processor 1230, and the memory 1240 are connected by using the bus system 1250. The memory 1240 is configured to store an instruction. The processor 1230 is configured to execute the instruction stored in the memory 1240, to control the receiver 1210 to receive a signal and control the transmitter 1220 to send a signal.

The processor 1230 is configured to determine key information of a Transport Layer Security TLS secure channel established between a client and the server.

The transmitter 1220 is configured to send, to a key manager by using a second secure channel, the key information determined by the processor 1230, so that the key manager sends, by using a first secure channel, the key information to a middlebox network device located on the TLS secure channel, and the middlebox network device decrypts, by using a session key corresponding to the key information, encrypted application data transmitted over the TLS secure channel, and detects decrypted application data. The encrypted application data is generated by the client or the server by encrypting application data based on the session key, the first secure channel is a secure channel established between the key manager and the middlebox network device, and the second secure channel is a secure channel established between the key manager and the server.

It should be understood that in this embodiment of the present invention, the processor 1230 may be a central processing unit (central processing unit, "CPU" for short), or the processor 1230 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory 1240 may include a read-only memory and a random access memory, and provides an instruction and data for the processor 1230. A part of the memory 1240 may further include a nonvolatile random access memory.

In addition to a data bus, the bus system 1250 may include a power bus, a control bus, a status signal bus, and the like. However, for clarity of description, various buses are marked as the bus system 1250 in the figure.

In an implementation process, steps in the foregoing method may be completed by using an integrated logic circuit of hardware in the processor 1230 or an instruction in a form of software. Steps of the method for detecting encrypted content disclosed with reference to the embodiments of the present invention may be directly executed and completed by a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 1240. The processor 1230 reads information in the memory 1240, and completes the steps of the foregoing method in combination with hardware of the processor. To avoid repetition, details are not described herein.

The units of the server 1200 in this embodiment of the present invention and the foregoing other operations or functions are respectively to implement corresponding procedures executed by the server in the methods shown in FIG. 4 to FIG. 6. For brevity, details are not described herein again.

Therefore, the server in this embodiment of the present invention provides the key information for the middlebox network device by providing the key information for the key manager, so that the middlebox network device can decrypt the encrypted application data by using the session key corresponding to the key information, and detect decrypted content. In this way, detection of encrypted content does not rely on a TLS proxy server, and detection complexity and detection costs can be reduced.

An embodiment of the present invention further provides a client, and the client includes a receiver, a transmitter, a processor, a memory, and a bus system. The receiver, the transmitter, the processor, and the memory are connected by using the bus system. The memory is configured to store an instruction. The processor is configured to execute the instruction stored in the memory, to control the receiver to receive a signal and control the transmitter to send a signal.

The receiver is configured to receive a detection query message that is sent by using a Transport Layer Security TLS secure channel established between the client and a server. The detection query message is used to determine whether the client allows a middlebox network device to detect encrypted content of encrypted application data, and the encrypted application data is generated by the client or the server by encrypting application data based on a session key of the TLS secure channel.

The transmitter is configured to send, when the client allows the middlebox network device to detect the encrypted content of the encrypted application data, a detection allowed message to the server by using the TLS secure channel.

It should be understood that in this embodiment of the present invention, the processor may be a central processing unit (central processing unit, "CPU" for short), or the processor may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory may include a read-only memory and a random access memory, and provide an instruction and data for the processor. A part of the memory may further include a nonvolatile random access memory.

In addition to a data bus, the bus system may include a power bus, a control bus, a status signal bus, and the like. However, for clarity of description, various buses are marked as the bus system in the figure.

In an implementation process, steps in the foregoing method may be completed by using an integrated logic circuit of hardware in the processor or an instruction in a form of software. Steps of the method for detecting encrypted content disclosed with reference to the embodiments of the present invention may be directly executed and completed by a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing method in combination with the hardware in the processor. To avoid repetition, details are not described herein.

The units of the client in this embodiment of the present invention and the foregoing other operations or functions are respectively to implement corresponding procedures executed by the client in the methods shown in FIG. 4 to FIG. 6. For brevity, details are not described herein again.

When it is determined that the client allows the middlebox network device to detect encrypted content transmitted between the client and the server, the encrypted content is detected, so that a security risk can be reduced.

An embodiment of the present invention further provides an SDN controller, and the SDN controller includes a receiver, a transmitter, a processor, a memory, and a bus system. The receiver, the transmitter, the processor, and the memory are connected by using the bus system. The memory is configured to store an instruction. The processor is configured to execute the instruction stored in the memory, to control the receiver to receive a signal and control the transmitter to send a signal.

The receiver is configured to receive a device request message sent by a key manager. The device request message includes 5-tuple information of a Transport Layer Security TLS secure channel established between a client and a server, the 5-tuple information includes an Internet Protocol IP address of the client, a port number of the client, an IP address of the server, a port number of the server, and a transport layer protocol, and the device request message is used to request device information of a middlebox network device that is on the TLS secure channel identified by the 5-tuple information.

The processor is configured to determine, based on the device request message, the device information of the middlebox network device that is on the TLS secure channel identified by the 5-tuple information.

The transmitter is configured to send the device information to the key manager, so that the key manager sends the 5-tuple information and key information of the TLS secure channel to the middlebox network device based on the device information of the middlebox network device by using a first secure channel, and the middlebox network device obtains, based on the 5-tuple information, encrypted application data transmitted between the client and the server by using the TLS secure channel, decrypts the encrypted application data by using a session key corresponding to the key information, and detects decrypted application data. The encrypted application data is generated by the client or the server by encrypting application data based on the session key, and the first secure channel is a secure channel established between the middlebox network device and the key manager.

It should be understood that in this embodiment of the present invention, the processor may be a central processing unit (central processing unit, "CPU" for short), or the processor may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory may include a read-only memory and a random access memory, and provide an instruction and data for the processor. A part of the memory may further include a nonvolatile random access memory.

In addition to a data bus, the bus system may include a power bus, a control bus, a status signal bus, and the like. However, for clarity of description, various buses are marked as the bus system in the figure.

In an implementation process, steps in the foregoing method may be completed by using an integrated logic circuit of hardware in the processor or an instruction in a form of software. Steps of the method for detecting encrypted content disclosed with reference to the embodiments of the present invention may be directly executed and completed by a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing method in combination with the hardware in the processor. To avoid repetition, details are not described herein again.

The units of the SDN controller in this embodiment of the present invention and the foregoing other operations or functions are respectively to implement corresponding procedures executed by the SDN controller in the methods shown in FIG. 4 to FIG. 6. For brevity, details are not described herein again.

Therefore, the middlebox network device determined by the SDN controller in this embodiment of the present invention decrypts the encrypted application data, and detects the decrypted application data. In this way, detection of encrypted content does not rely on a TLS proxy server, and detection complexity and detection costs can be reduced.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in the embodiments of the present invention. The execution sequences of the processes should be determined based on functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for convenience and conciseness of description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for detecting encrypted content, wherein the method is applied to a communications network, the communications network comprises a middlebox network device, a key manager, and a server, the middlebox network device is located on a Transport Layer Security, TLS, secure channel established between a client and the server, and the method comprises:
1.1 obtaining, by the key manager, key information of the TLS secure channel;
1.2 sending, by the key manager, the key information to the middlebox network device by using a first secure channel, so that the middlebox network device decrypts, by using a session key corresponding to the key information, encrypted application data transmitted over the TLS secure channel, and detects decrypted application data, wherein the encrypted application data is generated by the client or the server by encrypting application data based on the session key, and the first secure channel is a secure channel established between the key manager and the middlebox network device;wherein the key information comprises a first random number, a second random number, a pre-master key, and a pseudo-random function, and the first random number, the second random number, the pre-master key, and the pseudo-random function are used for generating the session key of the TLS secure channel; and
1.3. wherein before the obtaining, by the key manager, key information of the TLS secure channel, the method further comprises:
1.3.1. receiving, by the key manager, a first key request message sent by the middlebox network device by using the first secure channel, wherein the first key request message comprises 5-tuple information of the TLS secure channel, the first key request message is used to request the key information, and the 5-tuple information comprises an Internet Protocol **IP** address of the client, a port number of the client, an **IP** address of the server, a port number of the server, and a transport layer protocol; andl.3.2. obtaining, by the key manager, key information of the TLS secure channel comprises: obtaining, by the key manager, the key information based on the 5-tuple information.

2. The method according to claim 1, wherein the obtaining, by the key manager, the key information based on the 5-tuple information comprises:
sending, by the key manager, a second key request message to the server by using a second secure channel, wherein the second key request message comprises the 5-tuple information, and the second secure channel is a secure channel established between the key manager and the server; and
receiving, by the key manager, the key information sent by the server based on the second key request message.

3. The method according to any one of claims 1 or 2, wherein the first random number and the pre-master key are random numbers generated by the client, the second random number is a random number generated by the server, and the pseudo-random function is used to generate the session key based on the first random number, the second random number, and the pre-master key.

4. The method according to claim 3, wherein the obtaining, by the key manager, key information of the TLS secure channel comprises:
generating, by the key manager, the session key based on the first random number, the second random number, the pre-master key, and the pseudo-random function that are received from the server, wherein the first random number and the pre-master key are random numbers generated by the client, the second random number is a random number generated by the server, and the pseudo-random function is used to generate the session key based on the first random number, the second random number, and the pre-master key.

5. A method for detecting encrypted content, wherein the method is applied to a communications network, the communications network comprises a middlebox network device, a key manager, and a server, the middlebox network device is located on a Transport Layer Security, TLS, secure channel established between a client and the server, and the method comprises:
5.1. receiving, by the middlebox network device by using a first secure channel, key information that is of the TLS secure channel and that is sent by the key manager, wherein the first secure channel is a secure channel established between the middlebox network device and the key manager;
5.2. obtaining, by the middlebox network device, a session key based on the key information, wherein the key information comprises a first random number, a second random number, a pre-master key, and a pseudo-random function;
5.3. obtaining, by the middlebox network device based on 5-tuple information of the TLS secure channel corresponding to the key information, encrypted application data transmitted over the TLS secure channel, wherein the 5-tuple information comprises an Internet Protocol IP address of the client, a port number of the client, an IP address of the server, a port number of the server, and a transport layer protocol, and the encrypted application data is generated by the client or the server by encrypting application data based on the session key; and
5.4. decrypting, by the middlebox network device, the encrypted application data by using the session key, and detecting decrypted application data.

6. A method for detecting encrypted content, wherein the method is applied to a communications network, the communications network comprises a middlebox network device, a key manager, and a server, the middlebox network device is located on a Transport Layer Security, TLS, secure channel established between a client and the server, and the method comprises:
6.1. determining, by the server, key information of the TLS secure channel;
6.2. sending, by the server, the key information to the key manager by using a second secure channel, so that the key manager sends the key information to the middlebox network device by using a first secure channel, and the middlebox network device decrypts, by using a session key corresponding to the key information, encrypted application data transmitted over the TLS secure channel, and detects decrypted application data, wherein the encrypted application data is generated by the client or the server by encrypting application data based on the session key, the first secure channel is a secure channel established between the key manager and the middlebox network device, and the second secure channel is a secure channel established between the key manager and the server; wherein the key information comprises a first random number, a second random number, a pre-master key, and a pseudo-random function, and the first random number, the second random number, the pre-master key, and the pseudo-random function are used for generating the session key of the TLS secure channel;
6.3. wherein before the determining, by the server, key information of the TLS secure channel, the method further comprises:
6.3.1. receiving, by the server, a key request message sent by the key manager by using the second secure channel, wherein the key request message comprises 5-tuple information of the TLS secure channel, the key request message is used to request the key information, and the 5-tuple information comprises an Internet Protocol IP address of the client, a port number of the client, an IP address of the server, a port number of the server, and a transport layer protocol;
6.4. determining, by the server, key information comprises:
6.4.1. determining, by the server based on the 5-tuple information, the key information of the TLS secure channel identified by the 5-tuple information.

7. The method according to claim 6, wherein before the sending, by the server, the key information to the key manager by using the second secure channel, the method further comprises:
sending, by the server, a detection query message to the client by using the TLS secure channel, wherein the detection query message is used to determine whether the client allows the middlebox network device to detect encrypted content of the encrypted application data; and
receiving, by the server, a detection allowed message that is fed back on the detection query message and that is sent by the client, wherein the detection allowed message is used to indicate that the client allows the middlebox network device to detect the encrypted content of the encrypted application data.

8. A key manager, comprising:
8.1. an obtaining unit, configured to obtain key information of a Transport Layer Security, TLS, secure channel, wherein the TLS secure channel is a secure channel established between a client and a server;
8.2. a sending unit, configured to send, to a middlebox network device by using a first secure channel, the key information obtained by the obtaining unit, so that the middlebox network device decrypts, by using a session key corresponding to the key information, encrypted application data transmitted over the TLS secure channel, and detects decrypted application data, wherein the encrypted application data is generated by the client or the server by encrypting application data based on the session key, the middlebox network device is located on the TLS secure channel, and the first secure channel is a secure channel established between the key manager and the middlebox network device;
8.3. wherein the key information comprises a first random number, a second random number, a pre-master key, and a pseudo-random function, wherein the session key is generated based on the first and second random number, the pre-master key and the random pseudo random number; and
8.4. wherein before the obtaining, by the key manager, key information of the TLS secure channel, the key manager further adapted to:
8.4.1. receive, by the key manager, a first key request message sent by the middlebox network device by using the first secure channel, wherein the first key request message comprises 5-tuple information of the TLS secure channel, the first key request message is used to request the key information, and the 5-tuple information comprises an Internet Protocol IP address of the client, a port number of the client, an IP address of the server, a port number of the server, and a transport layer protocol; and
8.4.2. the obtaining unit obtaining key information of the TLS secure channel based on the 5-tuple information.

9. A middlebox network device, wherein the middlebox network device is located on a Transport Layer Security, TLS, secure channel established between a client and a server, and comprises:
9.1. a receiving unit, configured to receive, by using a first secure channel, key information that is of the TLS secure channel and that is sent by a key manager, wherein the first secure channel is a secure channel established between the middlebox network device and the key manager;
9.2. the middlebox network device adapted to generate a session key based on the key information, wherein the key information comprises a first random number, a second random number, a pre-master key, and a pseudo-random function;
9.3. an obtaining unit, configured to obtain, based on 5-tuple information of the TLS secure channel corresponding to the key information, encrypted application data transmitted over the TLS secure channel, wherein the 5-tuple information comprises an Internet Protocol **IP** address of the client, a port number of the client, an **IP** address of the server, a port number of the server, and a transport layer protocol, and the encrypted application data is generated by the client or the server by encrypting application data based on a session key; and
9.4. a decryption and detection unit, configured to: decrypt the encrypted application data by using the session key, and detect decrypted application data.

10. A server, comprising:
10.1. a determining unit, configured to determine key information of a Transport Layer Security, TLS, secure channel established between a client and the server;
10.2. a sending unit, configured to send, to a key manager by using a second secure channel, the key information determined by the determining unit, so that the key manager sends, by using a first secure channel, the key information to a middlebox network device located on the TLS secure channel, and the middlebox network device decrypts, by using a session key corresponding to the key information, encrypted application data transmitted over the TLS secure channel, and detects decrypted application data, wherein the encrypted application data is generated by the client or the server by encrypting application data based on the session key, the first secure channel is a secure channel established between the key manager and the middlebox network device, and the second secure channel is a secure channel established between the key manager and the server; wherein the key information comprises a first random number, a second random number, a pre-master key, and a pseudo-random function, the first random number, the second random number, the pre-master key, and the pseudo-random function are used for generating the session key of the TLS secure channel;
10.3. wherein before the determining, by the determining unit of the server, key information of the TLS secure channel, the server further adapted to:
10.3.1. receive, by the server, a key request message sent by the key manager by using the second secure channel, wherein the key request message comprises 5-tuple information of the TLS secure channel, the key request message is used to request the key information, and the 5-tuple information comprises an Internet Protocol IP address of the client, a port number of the client, an IP address of the server, a port number of the server, and a transport layer protocol; and
10.4. the determining unit of the server for determining the key information adapted to:
10.4.1. determine, by the server based on the 5-tuple information, the key information of the TLS secure channel identified by the 5-tuple information.

## Patentansprüche

1. Verfahren zum Detektieren von verschlüsseltem Inhalt, wobei das Verfahren auf ein Kommunikationsnetz angewandt wird, das Kommunikationsnetz eine "Middlebox"-Netzvorrichtung, einen Schlüsselmanager und einen Server umfasst, sich die "Middlebox"-Netzvorrichtung auf einem zwischen einem Client und dem Server hergestellten sicheren "Transport Layer Security"- bzw. TLS-Kanal befindet und das Verfahren Folgendes umfasst:
1.1 Erhalten von Schlüsselinformationen des sicheren TLS-Kanals durch den Schlüsselmanager;
1.2 Senden der Schlüsselinformationen zu der "Middlebox"-Netzvorrichtung durch den Schlüsselmanager durch Verwendung eines ersten sicheren Kanals, so dass die "Middlebox"-Netzvorrichtung durch Verwendung eines den Schlüsselinformationen entsprechenden Sitzungsschlüssels über den sicheren TLS-Kanal übertragene verschlüsselte Anwendungsdaten entschlüsselt und entschlüsselte Anwendungsdaten detektiert, wobei die verschlüsselten Anwendungsdaten durch den Client oder den Server durch Verschlüsseln von Anwendungsdaten auf der Basis des Sitzungsschlüssels erzeugt werden und der erste sichere Kanal ein zwischen dem Schlüsselmanager und der "Middlebox"-Netzvorrichtung hergestellter sicherer Kanal ist; wobei die Schlüsselinformationen eine erste Zufallszahl, eine zweite Zufallszahl, einen Prä-Master-Schlüssel und eine Pseudozufallsfunktion umfassen und die erste Zufallszahl, die zweite Zufallszahl, der Prä-Masterschlüssel und die Pseudozufallsfunktion zur Erzeugung des Sitzungsschlüssels des sicheren TLS-Kanals verwendet werden; und
1.3. wobei das Verfahren vor dem Erhalten von Schlüsselinformationen des sicheren TLS-Kanals durch den Schlüsselmanager ferner Folgendes umfasst:
1.3.1. Empfangen einer durch die "Middlebox"-Netzvorrichtung durch Verwendung des ersten sicheren Kanals gesendeten ersten Schlüsselanforderungsnachricht durch den Schlüsselmanager, wobei die erste Schlüsselanforderungsnachricht 5-Tupel-Informationen des sicheren TLS-Kanals umfasst, die erste Schlüsselanforderungsnachricht zum Anfordern der Schlüsselinformationen verwendet wird und die 5-Tupel-Informationen eine Internet-Protokoll- bzw. **IP-**Adresse des Clients, eine Portnummer des Clients, eine **IP-**Adresse des Servers, eine Portnummer des Servers und ein Transportschichtprotokoll umfassen; und 1.3.2. Erhalten von Schlüsselinformationen des sicheren TLS-Kanals durch den Schlüsselmanager Folgendes umfasst: Erhalten der Schlüsselinformationen durch den Schlüsselmanager auf der Basis der 5-Tupel-Informationen.

2. Verfahren nach Anspruch 1, wobei das Erhalten der Schlüsselinformationen durch den Schlüsselmanager auf der Basis der 5-Tupel-Informationen Folgendes umfasst:
Senden einer zweiten Schlüsselanforderungsnachricht zu dem Server durch den Schlüsselmanager durch Verwendung eines zweiten sicheren Kanals, wobei die zweite Schlüsselanforderungsnachricht die 5-Tupel-Informationen umfasst und der zweite sichere Kanal ein zwischen dem Schlüsselmanager und dem Server hergestellter sicherer Kanal ist; und
Empfangen der durch den Server gesendeten Schlüsselinformationen durch den Schlüsselmanager auf der Basis der zweiten Schlüsselanforderungsnachricht.

3. Verfahren nach einem der Ansprüche 1 oder 2, wobei die erste Zufallszahl und der Prä-Master-Schlüssel durch den Client erzeugte Zufallszahlen sind und die zweite Zufallszahl eine durch den Server erzeugte Zufallszahl ist und die Pseudozufallsfunktion zur Erzeugung des Sitzungsschlüssels auf der Basis der ersten Zufallszahl, der zweiten Zufallszahl und des Prä-Master-Schlüssels verwendet wird.

4. Verfahren nach Anspruch 3, wobei das Erhalten von Schlüsselinformationen des sicheren TLS-Kanals durch den Schlüsselmanager Folgendes umfasst:
Erzeugen des Sitzungsschlüssels auf der Basis der ersten Zufallszahl, der zweiten Zufallszahl und des Prä-Master-Schlüssels und der Pseudozufallsfunktion, die vom Server empfangen werden, durch den Schlüsselmanager, wobei die erste Zufallszahl und der Prä-Master-Schlüssel durch den Client erzeugte Zufallszahlen sind und die zweite Zufallszahl eine durch den Server erzeugte Zufallszahl ist und die Pseudozufallsfunktion zur Erzeugung des Sitzungsschlüssels auf der Basis der ersten Zufallszahl, der zweiten Zufallszahl und des Prä-Master-Schlüssels verwendet wird.

5. Verfahren zum Detektieren von verschlüsseltem Inhalt, wobei das Verfahren auf ein Kommunikationsnetz angewandt wird, das Kommunikationsnetz eine "Middlebox"-Netzvorrichtung, einen Schlüsselmanager und einen Server umfasst, sich die "Middlebox"-Netzvorrichtung auf einem zwischen einem Client und dem Server hergestellten sicheren "Transport Layer Security"- bzw. TLS-Kanal befindet und das Verfahren Folgendes umfasst:
5.1. Empfangen von Schlüsselinformationen, die von dem sicheren TLS-Kanal sind und die durch den Schlüsselmanager gesendet werden, durch die "Middlebox"-Netzvorrichtung durch Verwendung eines ersten sicheren Kanals, wobei der erste sichere Kanal ein zwischen der "Middlebox"-Netzvorrichtung und dem Schlüsselmanager hergestellter sicherer Kanal ist;
5.2. Erhalten eines Sitzungsschlüssels durch die "Middlebox"-Netzvorrichtung auf der Basis der Schlüsselinformationen, wobei die Schlüsselinformationen eine erste Zufallszahl, eine zweite Zufallszahl, einen Prä-Master-Schlüssel und eine Pseudozufallsfunktion umfassen;
5.3. Erhalten von über den sicheren TLS-Kanal übertragenen verschlüsselten Anwendungsdaten durch die "Middlebox"-Netzvorrichtung auf der Basis der 5-Tupel-Informationen des sicheren TLS-Kanals, die den Schlüsselinformationen entsprechen, wobei die 5-Tupel-Informationen eine Internet-Protokoll- bzw. IP-Adresse des Clients, eine Portnummer des Clients, eine IP-Adresse des Servers, eine Portnummer des Servers und ein Transportschichtprotokoll umfassen und die verschlüsselten Anwendungsdaten durch den Client oder den Server durch Verschlüsseln von Anwendungsdaten auf der Basis des Sitzungsschlüssels erzeugt werden; und
5.4. Entschlüsseln der verschlüsselten Anwendungsdaten durch die "Middlebox"-Netzvorrichtung durch Verwendung des Sitzungsschlüssels und Detektieren von entschlüsselten Anwendungsdaten.

6. Verfahren zum Detektieren von verschlüsseltem Inhalt, wobei das Verfahren auf ein Kommunikationsnetz angewandt wird, das Kommunikationsnetz eine "Middlebox"-Netzvorrichtung, einen Schlüsselmanager und einen Server umfasst, sich die "Middlebox"-Netzvorrichtung auf einem zwischen einem Client und dem Server hergestellten sicheren "Transport Layer Security"- bzw. TLS-Kanal befindet und das Verfahren Folgendes umfasst:
6.1. Bestimmen von Schlüsselinformationen des sicheren TLS-Kanals durch den Server;
6.2. Senden der Schlüsselinformationen zu dem Schlüsselmanager durch den Server durch Verwendung eines zweiten sicheren Kanals, so dass der Schlüsselmanager die Schlüsselinformationen durch Verwendung eines ersten sicheren Kanals zu der "Middlebox"-Netzvorrichtung sendet und die "Middlebox"-Netzvorrichtung durch Verwendung eines den Schlüsselinformationen entsprechenden Sitzungsschlüssels verschlüsselte Anwendungsdaten entschlüsselt, die über den sicheren TLS-Kanal übertragen werden, und entschlüsselte Anwendungsdaten detektiert, wobei die verschlüsselten Anwendungsdaten durch den Client oder den Server durch Verschlüsseln von Anwendungsdaten auf der Basis des Sitzungsschlüssels erzeugt werden, der erste sichere Kanal ein zwischen dem Schlüsselmanager und der "Middlebox"-Netzvorrichtung hergestellter sicherer Kanal ist und der zweite sichere Kanal ein zwischen dem Schlüsselmanager und dem Server hergestellter sicherer Kanal ist; wobei die Schlüsselinformationen eine erste Zufallszahl, eine zweite Zufallszahl, einen Prä-Master-Schlüssel und eine Pseudozufallsfunktion umfassen und die erste Zufallszahl, die zweite Zufallszahl, der Prä-Master-Schlüssel und die Pseudozufallsfunktion zur Erzeugung des Sitzungsschlüssels des sicheren TLS-Kanals verwendet werden;
6.3. wobei das Verfahren vor dem Bestimmen von Schlüsselinformationen des sicheren TLS-Kanals durch den Server ferner Folgendes umfasst:
6.3.1. Empfangen einer durch den Schlüsselmanager durch Verwendung des zweiten sicheren Kanals gesendeten Schlüsselanforderungsnachricht durch den Server, wobei die Schlüsselanforderungsnachricht 5-Tupel-Informationen des sicheren TLS-Kanals umfasst, die Schlüsselanforderungsnachricht zum Anfordern der Schlüsselinformationen verwendet wird und die 5-Tupel-Informationen eine Internet-Protokoll- bzw. IP-Adresse des Clients, eine Portnummer des Clients, eine IP-Adresse des Servers, eine Portnummer des Servers und ein Transportschichtprotokoll umfassen;
6.4. Bestimmen von Schlüsselinformationen durch den Server Folgendes umfasst:
6.4.1. Bestimmen der Schlüsselinformationen des durch die 5-Tupel-Informationen identifizierten sicheren TLS-Kanals durch den Server auf der Basis der 5-Tupel-Informationen.

7. Verfahren nach Anspruch 6, wobei das Verfahren vor dem Senden der Schlüsselinformationen zu dem Schlüsselmanager durch den Server durch Verwendung des zweiten sicheren Kanals ferner Folgendes umfasst:
Senden einer Detektionsanfragenachricht zu dem Client durch den Server durch Verwendung des sicheren TLS-Kanals, wobei die Detektionsanfragenachricht verwendet wird, um zu bestimmen, ob der Client der "Middlebox"-Netzvorrichtung erlaubt, verschlüsselten Inhalt der verschlüsselten Anwendungsdaten zu detektieren; und
Empfangen einer Detektion-Erlaubt-Nachricht, die auf der Detektionsanfragenachricht rückgemeldet wird und die durch den Client gesendet wird, durch den Server, wobei die Detektion-Erlaubt-Nachricht verwendet wird, um anzugeben, dass der Client der "Middlebox"-Netzvorrichtung erlaubt, den verschlüsselten Inhalt der verschlüsselten Anwendungsdaten zu detektieren.

8. Schlüsselmanager, umfassend:
8.1. eine Erhalteeinheit, ausgelegt zum Erhalten von Schlüsselinformationen eines sicheren "Transport Layer Security"- bzw. TLS-Kanals, wobei der sichere TLS-Kanal ein zwischen einem Client und einem Server hergestellter sicherer Kanal ist;
8.2. eine Sendeeinheit, ausgelegt zum Senden der durch die Erhalteeinheit erhaltenen Schlüsselinformationen zu einer "Middlebox"-Netzvorrichtung durch Verwendung eines ersten sicheren Kanals, so dass die "Middlebox"-Netzvorrichtung durch Verwendung eines den Schlüsselinformationen entsprechenden Sitzungsschlüssels über den sicheren TLS-Kanal übertragene verschlüsselte Anwendungsdaten entschlüsselt und entschlüsselte Anwendungsdaten detektiert, wobei die verschlüsselten Anwendungsdaten durch den Client oder den Server durch Verschlüsseln von Anwendungsdaten auf der Basis des Sitzungsschlüssels erzeugt werden, sich die "Middlebox"-Netzvorrichtung auf dem sicheren TLS-Kanal befindet und der erste sichere Kanal ein zwischen dem Schlüsselmanager und der "Middlebox"-Netzvorrichtung hergestellter sicherer Kanal ist;
8.3. wobei die Schlüsselinformationen eine erste Zufallszahl, eine zweite Zufallszahl, einen Prä-Master-Schlüssel und eine Pseudozufallsfunktion umfassen, wobei der Sitzungsschlüssel auf der Basis der ersten und zweiten Zufallszahl, des Prä-Master-Schlüssels und der Zufalls-Pseudozufallszahl erzeugt wird; und
8.4. wobei der Schlüsselmanager vor dem Erhalten von Schlüsselinformationen des sicheren TLS-Kanals durch den Schlüsselmanager ferner ausgelegt ist zum:
8.4.1. Empfangen einer durch die "Middlebox"-Netzvorrichtung durch Verwendung des ersten sicheren Kanals gesendeten ersten Schlüsselanforderungsnachricht durch den Schlüsselmanager, wobei die erste Schlüsselanforderungsnachricht 5-Tupel-Informationen des sicheren TLS-Kanals umfasst, die erste Schlüsselanforderungsnachricht zum Anfordern der Schlüsselinformationen verwendet wird und die 5-Tupel-Informationen eine Internet-Protokoll- bzw. IP-Adresse des Clients, eine Portnummer des Clients, eine IP-Adresse des Servers, eine Portnummer des Servers und ein Transportschichtprotokoll umfassen; und
8.4.2. die Erhalteeinheit Schlüsselinformationen des sicheren TLS-Kanals auf der Basis der 5-Tupel-Informationen erhält.

9. "Middlebox"-Netzvorrichtung, wobei sich die "Middlebox"-Netzvorrichtung auf einem zwischen einem Client und einem Server hergestellten sicheren "Transport Layer Security"- bzw. TLS-Kanal befindet und Folgendes umfasst:
9.1. eine Empfangseinheit, ausgelegt zum Empfangen von Schlüsselinformationen, die von dem sicheren TLS-Kanal sind und die durch einen Schlüsselmanager gesendet werden, durch Verwendung eines ersten sicheren Kanals, wobei der erste sichere Kanal ein zwischen der "Middlebox"-Netzvorrichtung und dem Schlüsselmanager hergestellter sicherer Kanal ist;
9.2. die "Middlebox"-Netzvorrichtung, ausgelegt zum Erzeugen eines Sitzungsschlüssels auf der Basis der Schlüsselinformationen, wobei die Schlüsselinformationen eine erste Zufallszahl, eine zweite Zufallszahl, einen Prä-Master-Schlüssel und eine Pseudozufallsfunktion umfassen;
9.3. eine Erhalteeinheit, ausgelegt zum Erhalten von über den sicheren TLS-Kanal übertragenen verschlüsselten Anwendungsdaten auf der Basis der 5-Tupel-Informationen des sicheren TLS-Kanals entsprechend den Schlüsselinformationen, wobei die 5-Tupel-Informationen eine Internet-Protokoll- bzw. IP-Adresse des Clients, eine Portnummer des Clients, eine IP-Adresse des Servers, eine Portnummer des Servers und ein Transportschichtprotokoll umfassen; und die verschlüsselten Anwendungsdaten durch den Client oder den Server durch Verschlüsseln von Anwendungsdaten auf der Basis eines Sitzungsschlüssels erzeugt werden; und 9.4. eine Entschlüsselungs- und Detektionseinheit, ausgelegt zum Entschlüsseln der verschlüsselten Anwendungsdaten durch Verwendung des Sitzungsschlüssels und Detektieren von entschlüsselten Anwendungsdaten.

10. Server, umfassend:
10.1. eine Bestimmungseinheit, ausgelegt zum Bestimmen von Schlüsselinformationen eines zwischen einem Client und einem Server hergestellten sicheren "Transport Layer Security"- bzw. TLS-Kanals;
10.2. eine Sendeeinheit, ausgelegt zum Senden der durch die Bestimmungseinheit bestimmten Schlüsselinformationen zu einem Schlüsselmanager durch Verwendung eines zweiten sicheren Kanals, so dass der Schlüsselmanager durch Verwendung eines ersten sicheren Kanals die Schlüsselinformationen zu einer "Middlebox"-Netzvorrichtung sendet, die sich auf dem sicheren TLS-Kanal befindet, und die "Middlebox"-Netzvorrichtung durch Verwendung eines den Schlüsselinformationen entsprechenden Sitzungsschlüssels über den sicheren TLS-Kanal übertragene verschlüsselte Anwendungsdaten entschlüsselt und entschlüsselte Anwendungsdaten detektiert, wobei die verschlüsselten Anwendungsdaten durch den Client oder den Serverdurch Verschlüsseln von Anwendungsdaten auf der Basis des Sitzungsschlüssels erzeugt werden, der erste sichere Kanal ein zwischen dem Schlüsselmanager und der "Middlebox"-Netzvorrichtung hergestellter sicherer Kanal ist und der zweite sichere Kanal ein zwischen dem Schlüsselmanager und dem Server hergestellter sicherer Kanal ist; wobei die Schlüsselinformationen eine erste Zufallszahl, eine zweite Zufallszahl, einen Prä-Master-Schlüssel und eine Pseudozufallsfunktion umfassen und die erste Zufallszahl, die zweite Zufallszahl, der Prä-Master-Schlüssel und die Pseudozufallsfunktion zur Erzeugung des Sitzungsschlüssels des sicheren TLS-Kanals verwendet werden;
10.3. wobei der Server vor dem Bestimmen von Schlüsselinformationen des sicheren TLS-Kanals durch die Bestimmungseinheit des Servers ferner ausgelegt ist zum
10.3.1. Empfangen einer durch den Schlüsselmanager durch Verwendung des zweiten sicheren Kanals gesendeten Schlüsselanforderungsnachricht durch den Server, wobei die Schlüsselanforderungsnachricht 5-Tupel-Informationen des sicheren TLS-Kanals umfasst, die Schlüsselanforderungsnachricht zum Anfordern der Schlüsselinformationen verwendet wird und die 5-Tupel-Informationen eine Internet-Protokoll- bzw. IP-Adresse des Clients, eine Portnummer des Clients, eine IP-Adresse des Servers, eine Portnummer des Servers und ein Transportschichtprotokoll umfassen; und
10.4. die Bestimmungseinheit des Servers zum Bestimmen der Schlüsselinformationen ausgelegt ist zum:
10.4.1. Bestimmen der Schlüsselinformationen des sicheren TLS-Kanals, der durch die 5-Tupel-Informationen identifiziert wird, durch den Server auf der Basis der 5-Tupel-Informationen.

## Revendications

1. Procédé de détection d'un contenu crypté, le procédé étant appliqué à un réseau de communication, le réseau de communication comprenant un dispositif de réseau de type boîtier intermédiaire, un gestionnaire de clés et un serveur, le dispositif de réseau de type boîtier intermédiaire étant situé sur un canal sécurisé à sécurité de couche transport (TLS) établi entre un client et le serveur, et le procédé comprenant les étapes consistant à :
1.1. obtenir, par le gestionnaire de clés, des informations de clé du canal sécurisé TLS ;
1.2. envoyer, par le gestionnaire de clés, les informations de clé au dispositif de réseau de type boîtier intermédiaire au moyen d'un premier canal sécurisé, de sorte que le dispositif de réseau de type boîtier intermédiaire décrypte, au moyen d'une clé de session correspondant aux informations de clé, des données d'application cryptées transmises sur le canal sécurisé TLS, et détecte des données d'application décryptées, les données d'application cryptées étant générées par le client ou le serveur en cryptant des données d'application sur la base de la clé de session, et le premier canal sécurisé étant un canal sécurisé établi entre le gestionnaire de clés et le dispositif de réseau de type boîtier intermédiaire ; les informations de clé comprenant un premier nombre aléatoire, un second nombre aléatoire, une préclé maîtresse et une fonction pseudo-aléatoire, et le premier nombre aléatoire, le second nombre aléatoire, la préclé maîtresse et la fonction pseudo-aléatoire étant utilisés pour générer la clé de session du canal sécurisé TLS ; et
1.3. avant l'obtention, par le gestionnaire de clés, des informations de clé du canal sécurisé TLS, le procédé comprenant en outre les étapes consistant à :
1.3.1. recevoir, par le gestionnaire de clés, un premier message de demande de clé envoyé par le dispositif de réseau de type boîtier intermédiaire au moyen du premier canal sécurisé, le premier message de demande de clé comprenant des informations à 5 uplets du canal sécurisé TLS, le premier message de demande de clé étant utilisé pour demander les informations de clé, et les informations à 5 uplets comprenant une adresse sur protocole Internet IP du client, un numéro de port du client, une adresse IP du serveur, un numéro de port du serveur et un protocole de couche transport ; et
1.3.2. obtenir, par le gestionnaire de clés, des informations de clé du canal sécurisé TLS comprenant l'étape consistant à : obtenir, par le gestionnaire de clés, les informations de clé sur la base des informations à 5 uplets.

2. Procédé selon la revendication 1, dans lequel l'obtention, par le gestionnaire de clés, des informations de clé sur la base des informations à 5 uplets comprend les étapes consistant à :
envoyer, par le gestionnaire de clés, un second message de demande de clé au serveur au moyen d'un second canal sécurisé, le second message de demande de clé comprenant les informations à 5 uplets, et le second canal sécurisé étant un canal sécurisé établi entre le gestionnaire de clés et le serveur ; et
recevoir, par le gestionnaire de clés, les informations de clé envoyées par le serveur sur la base du second message de demande de clé.

3. Procédé selon l'une quelconque des revendications 1 et 2, dans lequel le premier nombre aléatoire et la préclé maîtresse sont des nombres aléatoires générés par le client, le second nombre aléatoire est un nombre aléatoire généré par le serveur, et la fonction pseudo-aléatoire est utilisée pour générer la clé de session sur la base du premier nombre aléatoire, du second nombre aléatoire et de la préclé maîtresse.

4. Procédé selon la revendication 3, dans lequel l'obtention, par le gestionnaire de clés, des informations de clé du canal sécurisé TLS comprend l'étape consistant à :
générer, par le gestionnaire de clés, la clé de session sur la base du premier nombre aléatoire, du second nombre aléatoire, de la préclé maîtresse et de la fonction pseudo-aléatoire qui sont reçus en provenance du serveur, le premier nombre aléatoire et la préclé maîtresse étant des nombres aléatoires générés par le client, le second nombre aléatoire étant un nombre aléatoire généré par le serveur, et la fonction pseudo-aléatoire étant utilisée pour générer la clé de session sur la base du premier nombre aléatoire, du second nombre aléatoire et de la préclé maîtresse.

5. Procédé de détection d'un contenu crypté, le procédé étant appliqué à un réseau de communication, le réseau de communication comprenant un dispositif de réseau de type boîtier intermédiaire, un gestionnaire de clés et un serveur, le dispositif de réseau de type boîtier intermédiaire étant situé sur un canal sécurisé à sécurité de couche transport (TLS) établi entre un client et le serveur, et le procédé comprenant les étapes consistant à :
5.1. recevoir, par le dispositif de réseau de type boîtier intermédiaire au moyen d'un premier canal sécurisé, des informations de clé qui sont du canal sécurisé TLS et qui sont envoyées par le gestionnaire de clés, le premier canal sécurisé étant un canal sécurisé établi entre le dispositif de réseau de type boîtier intermédiaire et le gestionnaire de clés ;
5.2. obtenir, par le dispositif de réseau de type boîtier intermédiaire, une clé de session sur la base des informations de clé, les informations de clé comprenant un premier nombre aléatoire, un second nombre aléatoire, une préclé maîtresse et une fonction pseudo-aléatoire ;
5.3. obtenir, par le dispositif de réseau de type boîtier intermédiaire sur la base d'informations à 5 uplets du canal sécurisé TLS correspondant aux informations de clé, des données d'application cryptées transmises sur le canal sécurisé TLS, les informations à 5 uplets comprenant une adresse sur protocole Internet (IP) du client, un numéro de port du client, une adresse IP du serveur, un numéro de port du serveur et un protocole de couche transport, et les données d'application cryptées étant générées par le client ou le serveur en cryptant des données d'application sur la base de la clé de session ; et
5.4. décrypter, par le dispositif de réseau de type boîtier intermédiaire, les données d'application cryptées au moyen de la clé de session, et détecter des données d'application décryptées.

6. Procédé de détection d'un contenu crypté, le procédé étant appliqué à un réseau de communication, le réseau de communication comprenant un dispositif de réseau de type boîtier intermédiaire, un gestionnaire de clés et un serveur, le dispositif de réseau de type boîtier intermédiaire étant situé sur un canal sécurisé à sécurité de couche transport (TLS) établi entre un client et le serveur, et le procédé comprenant les étapes consistant à :
6.1. déterminer, par le serveur, des informations de clé du canal sécurisé TLS ;
6.2. envoyer, par le serveur, les informations de clé au gestionnaire de clés au moyen d'un second canal sécurisé, de sorte que le gestionnaire de clés envoie les informations de clé au dispositif de réseau de type boîtier intermédiaire au moyen d'un premier canal sécurisé, et que le dispositif de réseau de type boîtier intermédiaire décrypte, au moyen d'une clé de session correspondant aux informations de clé, des données d'application cryptées transmises sur le canal sécurisé TLS, et détecte des données d'application décryptées, les données d'application cryptées étant générées par le client ou le serveur en cryptant des données d'application sur la base de la clé de session, le premier canal sécurisé étant un canal sécurisé établi entre le gestionnaire de clés et le dispositif de réseau de type boîtier intermédiaire, et le second canal sécurisé étant un canal sécurisé établi entre le gestionnaire de clés et le serveur ; les informations de clé comprenant un premier nombre aléatoire, un second nombre aléatoire, une préclé maîtresse et une fonction pseudo-aléatoire, et le premier nombre aléatoire, le second nombre aléatoire, la préclé maîtresse et la fonction pseudo-aléatoire étant utilisés pour générer la clé de session du canal sécurisé TLS ;
6.3. avant la détermination, par le serveur, des informations de clé du canal sécurisé TLS, le procédé comprenant en outre l'étape consistant à :
6.3.1. recevoir, par le serveur, un message de demande de clé envoyé par le gestionnaire de clés au moyen du second canal sécurisé, le message de demande de clé comprenant des informations à 5 uplets du canal sécurisé TLS, le message de demande de clé étant utilisé pour demander les informations de clé, et les informations à 5 uplets comprenant une adresse sur protocole Internet (IP) du client, un numéro de port du client, une adresse IP du serveur, un numéro de port du serveur et un protocole de couche transport ;
6.4. la détermination, par le serveur, des informations de clé comprenant l'étape consistant à :
6.4.1. déterminer, par le serveur sur la base des informations à 5 uplets, les informations de clé du canal sécurisé TLS identifié par les informations à 5 uplets.

7. Procédé selon la revendication 6, le procédé comprenant en outre, avant l'envoi, par le serveur, des informations de clé au gestionnaire de clés au moyen du second canal sécurisé, les étapes consistant à :
envoyer, par le serveur, un message de requête de détection au client au moyen du canal sécurisé TLS, le message de requête de détection étant utilisé pour déterminer si le client permet au dispositif de réseau de type boîtier intermédiaire de détecter un contenu crypté des données d'application cryptées ; et
recevoir, par le serveur, un message d'autorisation de détection qui est renvoyé sur le message de requête de détection et qui est envoyé par le client, le message d'autorisation de détection étant utilisé pour indiquer que le client permet au dispositif de réseau de type boîtier intermédiaire de détecter le contenu crypté des données d'application cryptées.

8. Gestionnaire de clés, comprenant :
8.1. une unité d'obtention, configurée pour obtenir des informations de clé d'un canal sécurisé à sécurité de couche transport (TLS), le canal sécurisé TLS étant un canal sécurisé établi entre un client et un serveur ;
8.2. une unité d'envoi, configurée pour envoyer, à un dispositif de réseau de type boîtier intermédiaire au moyen d'un premier canal sécurisé, les informations de clé obtenues par l'unité d'obtention, de sorte que le dispositif de réseau de type boîtier intermédiaire décrypte, au moyen d'une clé de session correspondant aux informations de clé, des données d'application cryptées transmises sur le canal sécurisé TLS, et détecte des données d'application décryptées, les données d'application cryptées étant générées par le client ou le serveur en cryptant des données d'application sur la base de la clé de session, le dispositif de réseau de type boîtier intermédiaire étant situé sur le canal sécurisé TLS, et le premier canal sécurisé étant un canal sécurisé établi entre le gestionnaire de clés et le dispositif de réseau de type boîtier intermédiaire ;
8.3. les informations de clé comprenant un premier nombre aléatoire, un second nombre aléatoire, une préclé maîtresse et une fonction pseudo-aléatoire, la clé de session étant générée sur la base du premier nombre aléatoire, du second nombre aléatoire, de la préclé maîtresse et de la fonction pseudo-aléatoire ; et
8.4. avant l'obtention, par le gestionnaire de clés, des informations de clé du canal sécurisé TLS, le gestionnaire de clés étant en outre conçu pour :
8.4.1. recevoir, par le gestionnaire de clés, un premier message de demande de clé envoyé par le dispositif de réseau de type boîtier intermédiaire au moyen du premier canal sécurisé, le premier message de demande de clé comprenant des informations à 5 uplets du canal sécurisé TLS, le premier message de demande de clé étant utilisé pour demander les informations de clé, et les informations à 5 uplets comprenant une adresse sur protocole Internet IP du client, un numéro de port du client, une adresse IP du serveur, un numéro de port du serveur et un protocole de couche transport ; et
8.4.2. l'unité d'obtention obtenant des informations de clé du canal sécurisé TLS sur la base des informations à 5 uplets.

9. Dispositif de réseau de type boîtier intermédiaire, le dispositif de réseau de type boîtier intermédiaire étant situé sur un canal sécurisé à sécurité de couche transport (TLS) établi entre un client et un serveur, et comprenant :
9.1. une unité de réception, configurée pour recevoir, au moyen d'un premier canal sécurisé, des informations de clé qui sont du canal sécurisé TLS et qui sont envoyées par un gestionnaire de clés, le premier canal sécurisé étant un canal sécurisé établi entre le dispositif de réseau de type boîtier intermédiaire et le gestionnaire de clés ;
9.2. le dispositif de réseau de type boîtier intermédiaire étant conçu pour générer une clé de session sur la base des informations de clé, les informations de clé comprenant un premier nombre aléatoire, un second nombre aléatoire, une préclé maîtresse et une fonction pseudo-aléatoire ;
9.3. une unité d'obtention, configurée pour obtenir, sur la base d'informations à 5 uplets du canal sécurisé TLS correspondant aux informations de clé, des données d'application cryptées transmises sur le canal sécurisé TLS, les informations à 5 uplets comprenant une adresse sur protocole Internet (IP) du client, un numéro de port du client, une adresse IP du serveur, un numéro de port du serveur et un protocole de couche transport, et les données d'application cryptées étant générées par le client ou le serveur en cryptant des données d'application sur la base d'une clé de session ; et
9.4. une unité de décryptage et de détection, configurée pour : décrypter les données d'application cryptées au moyen de la clé de session, et détecter des données d'application décryptées.

10. Serveur, comprenant :
10.1. une unité de détermination, configurée pour déterminer des informations de clé d'un canal sécurisé à sécurité de couche transport (TLS) établi entre un client et le serveur ;
10.2. une unité d'envoi, configurée pour envoyer, à un gestionnaire de clés au moyen d'un second canal sécurisé, les informations de clé déterminées par l'unité de détermination, de sorte que le gestionnaire de clés envoie, au moyen d'un premier canal sécurisé, les informations de clé à un dispositif de réseau de type boîtier intermédiaire situé sur le canal sécurisé TLS, et que le dispositif de réseau de type boîtier intermédiaire décrypte, au moyen d'une clé de session correspondant aux informations de clé, des données d'application cryptées transmises sur le canal sécurisé TLS, et détecte des données d'application décryptées, les données d'application cryptées étant générées par le client ou le serveur en cryptant des données d'application sur la base de la clé de session, le premier canal sécurisé étant un canal sécurisé établi entre le gestionnaire de clés et le dispositif de réseau de type boîtier intermédiaire, et le second canal sécurisé étant un canal sécurisé établi entre le gestionnaire de clés et le serveur ; les informations de clé comprenant un premier nombre aléatoire, un second nombre aléatoire, une préclé maîtresse et une fonction pseudo-aléatoire, le premier nombre aléatoire, le second nombre aléatoire, la préclé maîtresse et la fonction pseudo-aléatoire étant utilisés pour générer la clé de session du canal sécurisé TLS ;
10.3. avant la détermination, par l'unité de détermination du serveur, des informations de clé du canal sécurisé TLS, le serveur étant en outre conçu pour :
10.3.1. recevoir, par le serveur, un message de demande de clé envoyé par le gestionnaire de clés au moyen du second canal sécurisé, le message de demande de clé comprenant des informations à 5 uplets du canal sécurisé TLS, le message de demande de clé étant utilisé pour demander les informations de clé, et les informations à 5 uplets comprenant une adresse sur protocole Internet (IP) du client, un numéro de port du client, une adresse IP du serveur, un numéro de port du serveur et un protocole de couche transport ; et
10.4. l'unité de détermination du serveur pour déterminer les informations de clé étant conçue pour :
10.4.1. déterminer, par le serveur sur la base des informations à 5 uplets, les informations de clé du canal sécurisé TLS identifié par les informations à 5 uplets.
